# EUROPEAN PATENT APPLICATION

(11) **EP 4 685 948 A1**
(43) Date of publication of application: **28.01.2026**
(21) Application number: 23959288.4
(22) Date of filing: 24.11.2023
(51) Int. Cl.: H01M 50/209

(54) **HOUSING, BATTERY CELL, BATTERY, AND ELECTRICAL DEVICE**

(71) Applicant: Contemporary Amperex Technology Co., Limited, Ningde, Fujian 352100 (CN)
(72) Inventor: CAO, Mengkai, Ningde, Fujian 352100 (CN); LIN, Denghua, Ningde, Fujian 352100 (CN); LUO, Yan, Ningde, Fujian 352100 (CN); CHEN, Xinxiang, Ningde, Fujian 352100 (CN); HUANG, Shoujun, Ningde, Fujian 352100 (CN); ZHENG, Yulian, Ningde, Fujian 352100 (CN); WANG, Peng, Ningde, Fujian 352100 (CN)
(74) Representative: Lorenz Seidler Gossel Part. mbB
(86) International application number: PCT/CN2023/134129
(87) International publication number: WO 2025/107319

(57) **Abstract**

The present invention provides a housing, a battery cell, a battery, and an electrical device. An end portion of the housing along a first direction is provided with a housing opening, the housing comprises a first side plate and a second side plate arranged along the circumferential direction of the housing opening, a connecting plate is connected to the first side plate and the second side plate, at least part of an outer surface of the connecting plate comprises a curved face, the connecting plate comprises a first plate portion and a second plate portion, and on the first direction, the second plate portion is located on the side of the first plate portion close to the housing opening. The maximum thickness of the second plate portion is greater than or equal to the maximum thickness of the first plate portion. The embodiments of the present application can reduce the risk of cracking and damage at a welding position between the second plate portion and an end cover caused by housing deformation or battery cell vibration due to factors such as expansion stress of an electrode assembly, and improve the usage reliability of the battery cell.

## Description

### TECHNICAL FIELD

The present application relates to the technical field of batteries, and in particular, to a shell body, a battery cell, a battery, and an electric device.

### BACKGROUND

Battery cells are widely used in electronic devices, such as mobile phones, laptop computers, electric bicycles, electric vehicles, electric airplanes, electric ships, electric toy cars, electric toy ships, electric toy airplanes, and electric tools. Battery cells may include nickel-cadmium battery cells, nickel-hydrogen battery cells, lithium-ion battery cells, secondary alkaline zinc-manganese battery cells, etc.

However, during use, the shell body of the battery cell is prone to cracking, which affects the use reliability of the battery cell.

### SUMMARY

In view of the foregoing problems, the present application provides a shell body, a battery cell, a battery, and an electric device, which can improve the reliability of battery cells.

In one aspect, embodiments of the present application provide a shell body of a battery cell. An end part of the shell body in the first direction is provided with a shell body opening, the shell body includes a first side plate and a second side plate arranged along the circumferential direction of the shell body opening, a connecting plate is connected to the first side plate and the second side plate, and at least part of the outer surface of the connecting plate includes an arc-shaped surface. The connecting plate includes a first plate part and a second plate part, and in the first direction, the second plate part is located on a side of the first plate part proximal to the shell body opening. The maximum thickness of the second plate part is greater than or equal to the maximum thickness of the first plate part.

In the above solution, the second plate part is disposed closer to the shell body opening than the first plate part. During the process in which the shell body is fitted and connected to the end cover, the second plate part in the connecting plate will be welded and fixed to the end cover. On this basis, in the embodiments of the present application, the maximum thickness of the second plate part is set to be not less than the maximum thickness of the first plate part, thereby reducing the risk of cracking or breakage at the position where the second plate part is welded to the end cover caused by shell body deformation or battery cell vibration due to factors such as expansion stress of the electrode assembly, thus improving the use reliability of the battery cell.

In some embodiments, the first side plate includes a third plate part and a fourth plate part. In the first direction, the fourth plate part is located on a side of the third plate part proximal to the shell body opening. The maximum thickness of the fourth plate part is greater than the maximum thickness of the third plate part.

In the above solution, the maximum thickness of the fourth plate part is set to be greater than the maximum thickness of the third plate part, so that the fourth plate part can have greater structural strength than the third plate part, thereby reducing the risk of cracking or breakage at the position where the fourth plate part is welded to the end cover caused by the expansion stress of the electrode assembly, thus improving the use reliability of the battery cell.

In some embodiments, the inner surface of the third plate part is arranged to be concave relative to the inner surface of the fourth plate part; and/or the inner surface of the first plate part is arranged to be concave relative to the inner surface of the second plate part.

In the above solution, by arranging at least one of the third plate part and the first plate part to be concave, a clearance space can be formed. The clearance space can accommodate part of the structure of the battery cell, so that the spacing between the third plate part or the first plate part and the electrode assembly can be increased as much as possible without reducing the size of the electrode assembly. Thus, when the electrode assembly expands, the clearance space can accommodate certain degree of expansion of the electrode assembly, thereby reducing the degree of the deformation of the third plate part or the first plate part caused by the expansion of the electrode assembly, reducing the risk of cracks in the shell body, and thus improving the use reliability of the shell body and the corresponding battery cell.

In some embodiments, the outer surface of the third plate part is flush with the outer surface of the fourth plate part; and/or the outer surface of the first plate part is flush with the outer surface of the second plate part.

In the above solution, by arranging the outer surface of the third plate part to be flush with the outer surface of the fourth plate part, the flatness of the outer surface of the first side plate can be improved, reducing the risk of damage caused by the protruding part of the structure of the outer surface of the first side plate being in collision with other components, and thereby improving the use reliability of the first side plate. Similarly, by arranging the outer surface of the first plate part to be flush with the outer surface of the second plate part, the flatness of the outer surface of the connecting plate can be improved, reducing the risk of damage caused by the protruding part of the structure of the outer surface of the connecting plate being in collision with other components, and thereby improving the use reliability of the connecting plate.

In some embodiments, the maximum thickness of the third plate part is H1, the maximum thickness of the fourth plate part is H2, and H1 and H2 satisfy that 0.05 mm ≤ H2 - H1 ≤ 0.3 mm.

In the above solution, the thickness difference between the first plate part and the second plate part is set to be not less than 0.05 mm, so as to ensure that at least part of the structure in the battery cell can be accommodated in the clearance space, thereby reducing the degree of the deformation of the first plate part and meanwhile improving the utilization rate of the internal space of the battery cell and the energy density of the battery cell.

In some embodiments, the first side plate further includes a first transition part, and the first transition part is located between the first plate part and the second plate part. In a direction from the first plate part toward the second plate part, the thickness of the first transition part gradually increases.

In the above solution, the first transition part is located between the first plate part and the second plate part. Because the inner surface of the first plate part is arranged to be concave relative to the inner surface of the second plate part, in the embodiments of the present application, by allowing the thickness of the first transition part to gradually increase in a direction from the one plate part toward the second plate part to achieve a smooth transition between the first plate part and the second plate part by means of the first transition part, the difficulty in molding the shell body is reduced, the stress concentration is reduced, and thereby the risk of cracking of the first side plate is reduced.

In some embodiments, the first transition part includes a first transition surface facing the interior of the shell body, the included angle between the first transition surface and the first direction is α, and α satisfies that 2° ≤ α ≤ 60°.

In the above solution, by setting the included angle α between the first transition surface and the first direction to be not greater than 60°, the risk of puncturing the electrode assembly, the first insulating member, etc., is reduced, and the use reliability of the battery cell is improved. Meanwhile, this design also helps reduce the drafting difficulty associated with the fabrication of the shell body, thereby improving the production yield of the shell body.

In some embodiments, 2° ≤ α ≤ 40°.

In the above solution, by setting the included angle α between the first transition surface and the first direction to be not greater than 40°, the risk of puncturing the electrode assembly, the first insulating member, etc., is further reduced, and the use reliability of the battery cell is improved. Meanwhile, this also helps further reduce the drafting difficulty associated with the fabrication of the shell body, thereby improving the production yield of the shell body.

In some embodiments, the maximum thickness of the second plate part is H3, the maximum thickness of the fourth plate part 112 is H2, and H2 and H3 satisfy that 0.1 mm ≤ H3 ≤ 0.8H2.

In the above solution, the maximum thickness H3 of the second plate part is set to be not less than 0.1 mm to ensure that the second plate part can have a certain thickness dimension and thereby improve its use reliability. Meanwhile, the maximum thickness H3 of the second plate part is set to be not greater than 0.8H2 to reduce the risk of stress concentration at the connecting plate during the process of fabricating the shell body and reduce the probability of cracking at the connecting plate.

In some embodiments, the maximum thickness of the second plate part is not greater than the maximum thickness of the fourth plate part; and/or the difference between maximum thicknesses corresponding to the second plate part and the first plate part is not greater than the difference between maximum thicknesses corresponding to the fourth plate part and the third plate part.

In the above solution, the maximum thickness of the second plate part is set to be not greater than the maximum thickness of the fourth plate part, so that the thickness of the second plate part is relatively small. In this way, the drafting difficulty of the shell body at the position of the connecting plate is reduced, the risk of flanging and cracking of the connecting plate is reduced, and the production yield of the shell body is increased.

In some embodiments, two second side plates are disposed opposite to each other in the second direction, and the first direction intersects with the second direction. The fourth plate part includes a central part and an edge part located on at least one side of the central part in the second direction. The edge part is connected to the second plate part, and the maximum thickness of the edge part is less than the maximum thickness of the central part.

In the above solution, the maximum thickness of the edge part of the fourth plate part is less than the maximum thickness of the central part, and the presence of the edge part enables the fourth plate part to be partially unthickened or partially thickened to a relatively small extent. This helps reduce the drafting difficulty associated with the fourth plate part and increase the production yield of the shell body.

In some embodiments, the dimension of the central part in the second direction is Z1, the dimension of the shell body in the second direction is Z2, and Z1 and Z2 satisfy that 0.5 ≤ Z1/Z2.

In the above solution, the dimension of the central part in the second direction is limited, so that the dimension Z1 of the central part in the second direction is not less than half of the dimension of the shell body in the second direction. In this way, the structural reliability of the fourth plate part is improved, and the risk of cracking or breakage at the fourth plate part is reduced.

In some embodiments, the included angle between the inner surface of the fourth plate part and the inner surface of the second plate part is β, and β satisfies that 155° ≤ β ≤ 270°.

In the above solution, by setting β to be not less than 155°, the thickness of the fourth plate part can be reduced, thereby improving the drafting difficulty and reducing the risk of cracking. Further, β is further set to be not greater than 270° to reduce the difficulty in fabricating the shell body, improve the molding efficiency of the shell body, and help enhance the strength of the weld seam formed through welding.

In some embodiments, the second plate part includes a plate main body and a second transition part connecting the plate main body and the fourth plate part. The maximum thickness of the plate main body is less than the maximum thickness of the second transition part. In a direction gradually approaching the fourth plate part, the thickness of the second transition part exhibits a gradually increasing trend.

In the above solution, the fourth plate part is provided with the second transition part and the plate main body, and the plate body can be connected to the second plate part by means of the second transition part. Further, to mitigate sudden thickness changes at some positions in the shell body, in the embodiments of the present application, the thickness of the second transition part is set to exhibit a gradually decreasing trend in a direction from the second plate part toward the plate main body, thus achieving reliable transition between the second plate part and the plate main body, improving the reliability at the boundary between the second plate part and the fourth plate part, and reducing the difficulty in fabricating the shell body.

In some embodiments, two second side plates are disposed opposite to each other in the second direction, and the first direction intersects with the second direction. The dimension of the second transition part in the second direction is L1, and L1 satisfies that 1 mm ≤ L1 ≤ 15 mm.

In the above solution, the dimension L1 of the second transition part is set to be not less than 1 mm, thereby helping reduce the drafting difficulty of the shell body and improving the fabrication efficiency of the shell body. Meanwhile, the dimension L1 of the second transition part is also set to be not greater than 15 mm, thereby helping improve the welding strength between the shell body and the end cover and improving the use reliability of the subsequently formed battery cell.

In some embodiments, the inner surface of the second transition part includes an arc-shaped structure; and/or the inner surface of the second transition part includes a planar structure.

In the above solution, the second transition part is configured to connect the second plate part and the plate main body. On this basis, to improve the structural reliability of the shell body, in the embodiments of the present application, the inner surface of the second transition part is configured to include at least one of an arc-shaped structure and a planar structure. A rounded transition between the fourth plate part and the plate main body may be achieved by means of the arc-shaped structure, and a smooth transition between the fourth plate part and the plate main body may be achieved by means of the planar structure. In this way, the structural reliability of the shell body at the boundary between the second plate part and the fourth plate part can be improved, and meanwhile the stress concentration at the position of the connecting plate can be mitigated and the risk of cracking of the connecting plate can be reduced.

In some embodiments, the maximum thickness of the second plate part is greater than the maximum thickness of the first plate part. The connecting plate further includes a fifth transition part, and the fifth transition part is located between the first plate part and the second plate part. In the first direction and a direction from the first plate part toward the second plate part 132, the thickness of the fifth transition part gradually increases.

In the above solution, the fifth transition part is located between the first plate part and the second plate part. Because the maximum thickness of the second plate part is greater than or equal to the maximum thickness of the first plate part, in the embodiments of the present application, by allowing the thickness of the fifth transition part to gradually increase in a direction from the first plate part toward the second plate part to achieve a smooth transition between the first plate part and the second plate part by means of the fifth transition part, the difficulty in molding the shell body is reduced, the stress concentration is reduced, and thereby the risk of cracking of the first side plate is reduced.

In some embodiments, the sixth plate part is provided with a first recess formed by being recessed inward from the shell body opening, and the first recess is configured to bear the end cover.

In the above solution, by providing the first recess at the sixth plate part, the end cover can be partially located in the first recess. Therefore, the relative position of the end cover can be determined by means of the first recess, thereby improving the reliability of the relative position between the end cover and the shell body.

In some embodiments, the thickness dimension of the sixth plate part at the first recess is not less than the maximum thickness of the fifth plate part.

In the above solution, the structural strength of the sixth plate part can be further improved, thereby reducing the risk of cracking at the sixth plate part and improving the use reliability of the battery cell.

In some embodiments, the first side plate includes a third plate part and a fourth plate part. In the first direction, the fourth plate part is located on a side of the third plate part proximal to the shell body opening. In the first direction, the dimension of the sixth plate part is greater than or equal to the dimension of the fourth plate part.

In the above solution, by setting the dimension of the sixth plate part in the first direction to be greater than or equal to the dimension of the fourth plate part in the first direction, the difference in the structural strength between the sixth plate part and the fourth plate part caused by the presence of the first recess can be reduced, thereby further reducing the risk of cracking of the sixth plate part and improving the overall reliability.

In some embodiments, the second plate part is provided with a second recess formed by being recessed inward from the shell body opening, and the first recess is arranged to be in communication with the second recess.

In the above solution, the second recess is further provided in addition to the first recess. Both the first recess and the second recess are configured to bear the end cover, so that the reliability of the relative position of the end cover relative to the second side plate and the connecting plate can be improved, thereby helping improve the connection reliability between the end cover and the shell body. Further, in the embodiments of the present application, the first recess is further arranged to be in communication with the second recess. This helps reduce the risk of sudden thickness change of the shell body at the boundary between the first recess and the second recess, reduce the difficulty in fabricating the shell body, and improve the structural reliability of the shell body.

In some embodiments, the thickness of the second plate part at the second recess is not less than the maximum thickness of the first plate part.

In the above solution, the structural strength of the second plate part can be further improved, thereby reducing the risk of cracking at the second plate part and improving the use reliability of the battery cell.

In some embodiments, the second side plate includes a fifth plate part and a sixth plate part. In the first direction, the sixth plate part is located on a side of the fifth plate part proximal to the shell body opening, and the maximum thickness of the sixth plate part is greater than the maximum thickness of the fifth plate part.

In the above solution, the maximum thickness of the sixth plate part is set to be greater than the maximum thickness of the fifth plate part, so that the sixth plate part can have greater structural strength than the fifth plate part, thereby reducing the risk of cracking or breakage near the position where the sixth plate part is welded to the end cover caused by the expansion stress of the electrode assembly, thus improving the use reliability of the battery cell.

In some embodiments, the second side plate further includes a fourth transition part, and the fourth transition part is located between the fifth plate part and the sixth plate part;

in the first direction and a direction from the fifth plate part toward the sixth plate part, the thickness of the fourth transition part gradually increases; and/or the outer surface of the fifth plate part is flush with the outer surface of the sixth plate part.

In the above solution, by arranging the outer surface of the fifth plate part to be flush with the outer surface of the sixth plate part, the flatness of the outer surface of the second side plate can be improved, and thus the visual appearance of the shell body can be improved. In addition, if a plurality of battery cells are attached to each other in the battery, this design can reduce the risk of collision between different battery cells and improve the use reliability of the battery cells.

In some embodiments, two first side plates are disposed opposite to each other in the third direction, two second side plates are disposed opposite to each other in the second direction, and any two of the first direction, the second direction, and the third direction intersect with each other. The dimension of the first side plate in the second direction is greater than the dimension of the second side plate in the third direction.

In the above solution, the dimension of the first side plate in the second direction is greater than the dimension of the second side plate in the third direction. That is, the size of the outer surface of the first side plate may be greater than the size of the outer surface of the second side plate. This design can allow the first plate part of the first side plate to have a larger size, so that the clearance space formed by the recessing of the first plate part can have a larger accommodation size, thereby further meeting the expansion requirements of the electrode assembly and improving the corresponding energy density of the battery cell.

In some embodiments, the first side plate includes a third plate part disposed corresponding to the first plate part in the circumferential direction of the shell body, and the second side plate includes a fifth plate part disposed corresponding to the first plate part in the circumferential direction of the shell body. The first plate part is directly connected to the third plate part and the fifth plate part, and the inner surfaces of the first plate part, the third plate part, and the fifth plate part exhibit rounded transition.

In the above solution, the first plate part is directly connected to the third plate part, that is, there is no other transition structure therebetween. In this way, the transition smoothness at the boundary between the inner surface of the first plate part and the inner surface of the third plate part is improved. This helps simplify the connection form between the first side plate and the connecting plate and improve the reliability of the relative position between the two. In addition, the first plate part is directly connected to the fifth plate part, that is, there is no other transition structure therebetween. In this way, the transition smoothness at the boundary between the inner surface of the first plate part and the inner surface of the fifth plate part is improved. This helps simplify the connection form between the second side plate and the connecting plate and improve the reliability of the relative position between the two.

In some embodiments, the maximum thickness of the second plate part is H3, the maximum thickness of the fourth plate part is H2, and H2 and H3 satisfy that 0.1 mm ≤ H3 ≤ 0.8H2.

In the above solution, the thickness H3 of the second plate part is set to be not less than 0.1 mm to ensure that the second plate part can have a certain thickness dimension and thereby improve its use reliability. Meanwhile, the thickness H3 of the second plate part is set to be not greater than 0.8H2 to reduce the risk of stress concentration at the connecting plate during the process of fabricating the shell body and reduce the probability of cracking at the connecting plate.

In a second aspect, embodiments of the present application provide a battery cell. The battery cell includes the shell body, the end cover, and the electrode assembly according to any one of the aforementioned embodiments. The electrode assembly is accommodated in the shell body, and the end cover is welded to the second plate part, the first side plate, and the second side plate.

In some embodiments, the battery cell further includes an insulating assembly. The insulating assembly is disposed outside the electrode assembly and insulates the electrode assembly from the shell body. The first side plate includes the third plate part and the fourth plate part. In the first direction, the fourth plate part is located on a side of the third plate part proximal to the shell body opening. The inner surface of the third plate part is arranged to be concave relative to the inner surface of the fourth plate part to form the clearance space. The insulating assembly is at least partially located in the clearance space.

In the above solution, the insulating assembly is at least partially disposed in the clearance space, so that there is more space inside the shell body for accommodating the electrode assembly, and the energy density of the battery cell is improved.

In some embodiments, the insulating assembly includes a first insulating member and a second insulating member. The second insulating member defines, in an enclosing manner, a hollow structure configured to accommodate the electrode assembly and having an opening. The first insulating member is located on a side of the second insulating member facing away from the electrode assembly, and the first insulating member is at least partially located in the clearance space.

In the above solution, at least part of the first insulating member is disposed in the clearance space, thereby reducing the occupation of other spaces inside the shell body by the first insulating member, so that there can be more space inside the shell body for accommodating the electrode assembly, and the energy density of the battery cell is improved.

In some embodiments, the second insulating member presents a surrounding form with ends connected to form an overlapping region, and the first insulating member is fixed to the overlapping region. In some embodiments, part of the electrode assembly is located in the clearance space.

In the above solution, the first insulating member is fixed to the overlapping region, thereby reducing the risk of breakage and cracking of the second insulation due to the fixation between the first insulating member and the second insulating member and improving the structural reliability of the second insulating member. In addition, disposing the first insulating member at the overlapping region also helps reduce the risk of breaking of the second insulating member at the overlapping region, thereby further improving the reliability of the second insulating member.

In some embodiments, the second insulating member is partially located in the clearance space.

In the above solution, at least part of the structure of the first insulating member and part of the second insulating member are disposed in the clearance space, so that there is further more space inside the shell body for accommodating the electrode assembly, and the energy density of the battery cell is improved.

In some embodiments, part of the electrode assembly is located in the clearance space.

In the above solution, by controlling the concave dimension of the third plate part relative to the fourth plate part, in addition to the first insulating member and the second insulating member, part of the structure of the electrode assembly can also be located in the clearance space. In this way, the size of the electrode assembly inside the shell body can be further increased without changing the overall size of the battery cell, thereby improving the energy density of the battery cell and increasing the capacity of the battery cell.

In some embodiments, the first side plate further includes a first transition part. The first transition part is located between the third plate part and the fourth plate part, and the fourth plate part is located on a side of the third plate part proximal to the shell body opening. In the first direction and in a direction from the third plate part toward the fourth plate part, the thickness of the first transition part gradually increases. The electrode assembly includes a main body part and a tab connected to the main body part. The main body part is located on a side of the first transition part facing away from the shell body opening.

In the above solution, by disposing the main body part on the side of the first transition part facing away from the shell body opening, part of the structure of the main body part can be more easily accommodated in the clearance space, thereby improving the energy density of the battery cell, reducing the risk of the sharp angle formed by the first transition part puncturing the main body part, and improving the use reliability of the main body part.

In some embodiments, in the first direction, the projection of the main body part overlaps with the projection of the fourth plate part. In the thickness direction of the first side plate, the projection of the first transition part does not overlap with the projection of the main body part.

In the above solution, by allowing the projection of the main body part to overlap with the projection of the fourth plate part in the first direction, the main body part is partially located in the clearance space, thereby improving the energy density of the battery cell. Meanwhile, by allowing the projection of the first transition part to not overlap with the projection of the main body part in the thickness direction of the first side plate, the risk of the sharp angle formed by the first transition part puncturing the main body part is reduced, and the use reliability of the main body part is improved.

In some embodiments, the battery cell further includes a second insulating member. The second insulating member defines, in an enclosing manner, a hollow structure configured to accommodate the electrode assembly and having an opening. The electrode assembly includes a main body part and a tab connected to the main body part. The second insulating member extends beyond the main body part by a dimension L1 in the first direction, and L1 satisfies that 1 mm ≤ L1 ≤ 10 mm.

In the above solution, the second insulating member is configured to block the electric conduction and friction between the electrode assembly and the shell body. Further, in the embodiments of the present application, the second insulating member is arranged to extend beyond the main body part in the first direction to improve the insulating effect of the second insulating member on the electrode assembly. On this basis, in the embodiments of the present application, the second insulating member is arranged to extend beyond the main body part by a dimension L1 of not less than 1 mm in the first direction to ensure the insulating protection effect of the second insulating member on the main body part. Meanwhile, the second insulating member is arranged to extend beyond the main body part by a dimension L1 of not greater than 10 mm in the first direction to reduce the possibility of the second insulating member occupying too much space inside the battery cell due to its overlarge size, thereby improving the energy density of the battery cell.

In some embodiments, the spacing between the side of the second insulating member facing the shell body opening and the shell body opening in the first direction is L2, and L2 satisfies that 1 mm ≤ L2 ≤ 10 mm.

In the above solution, L2 is set to be not less than 1 mm to help improve the welding strength between the second insulating member and the insulating structure such as the lower plastic part, thereby improving the reliability. Meanwhile, L2 is also set to be not greater than 10 mm to reduce the occupation of the internal space of the shell body by the second insulating member, which helps improve the energy density of the battery cell.

In some embodiments, the shell body further includes a bottom plate disposed opposite to the shell body opening. The thickness of the bottom plate is W3, and W3 satisfies that 0.7 mm ≤ W3 ≤ 5mm.

In the above solution, the thickness of the bottom plate is reduced, so that W3 is not greater than 5 mm, thereby providing more space for the electrode assembly and improving the energy density of the battery cell. Further, in the embodiments of the present application, W3 is further set to be not less than 0.7 mm to ensure that the bottom plate can have a certain structural strength, thereby reducing the risk of cracking of the bottom plate and improving the reliability.

In some embodiments, the thickness of the second plate part is less than the thickness of the bottom plate.

In the embodiments of the present application, to ensure the fabrication reliability of the shell body and the stress resistance capability of the shell body, the maximum thickness of the bottom plate is set to be greater than the maximum thickness of the second plate part in the embodiments of the present application, so that the bottom plate can have a certain structural strength, thereby reducing the risk of cracking of the bottom plate and improving the reliability. Further optionally, the maximum thickness of the bottom plate is greater than the maximum thickness of the fourth plate part; and/or the maximum thickness of the bottom plate is greater than the maximum thickness of the sixth plate part.

In some embodiments, the first side plate includes a third plate part and a fourth plate part. In the first direction, the fourth plate part is located on a side of the third plate part proximal to the shell body opening. The second side plate includes a fifth plate part and a sixth plate part. In the first direction, the sixth plate part is located on a side of the fifth plate part proximal to the shell body opening, and the sixth plate part is provided with a first recess formed by being recessed inward from the shell body opening. the end cover is partially located in the first recess and connected to the sixth plate part and the fourth plate part.

In the above solution, the end cover may be partially located in the first recess, so that the relative position of the end cover is determined by means of the first recess. On this basis, the end cover may further be connected and fixed to the fourth plate part and the sixth plate part through welding, thus improving the reliability of the relative position between the end cover and the shell body.

In a second aspect, embodiments of the present application provide a battery. The battery includes the battery cell according to any one of the aforementioned embodiments.

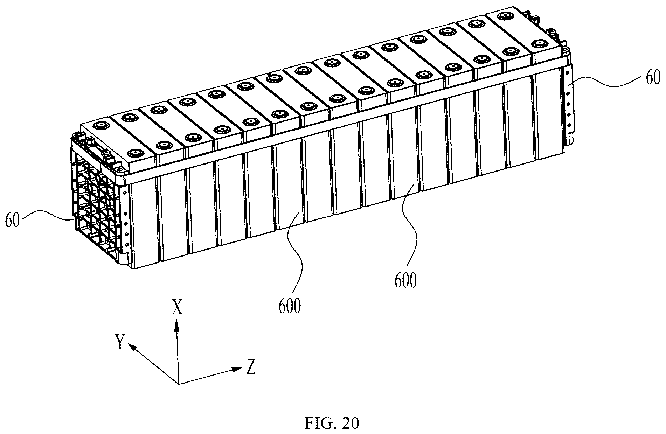

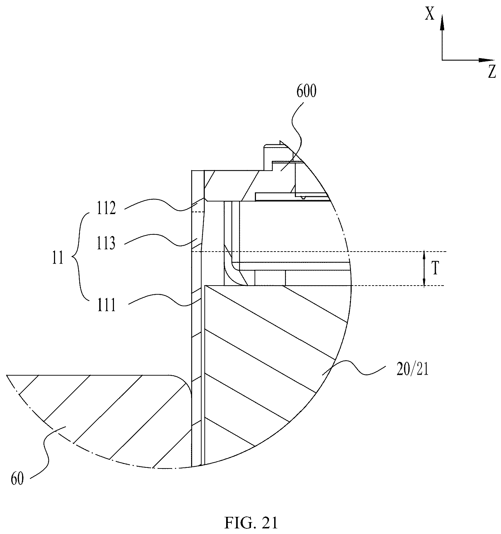

In some embodiments, referring to FIG. 20 and FIG. 21, the battery includes a battery cell group and an end plate. The battery cell group includes a plurality of battery cells stacked in the third direction. The first side plate includes a third plate part and a fourth plate part, and in the first direction, the fourth plate part is located on a side of the third plate part proximal to the shell body opening. The maximum thickness of the fourth plate part is greater than the maximum thickness of the third plate part, and the third direction is parallel to the thickness direction of the first side plate and intersects with the first direction. In the third direction, the end plate is disposed at the end part of the battery cell group, where in the direction from the third plate part toward the fourth plate part, the fourth plate part is arranged to at least partially extend beyond the end plate.

In the above solution, in the direction from the third plate part toward the fourth plate part, the fourth plate part is arranged to extend beyond the end plate, where in the direction from the third plate part toward the fourth plate part, the fourth plate part may be arranged to entirely extend beyond the end plate, or the fourth plate part may be arranged to only partially extend beyond the end plate. At least part of the structure of the fourth plate part extending beyond the end plate is not constrained by the end plate. On this basis, by setting the thickness of the fourth plate part to be greater than the thickness of the third plate part, the strength corresponding to the part of the structure that is not constrained by the end plate can be improved, thereby mitigating the risk of cracking caused by constraints from the end plate and improving the use reliability of the battery.

In a third aspect, embodiments of the present application provide an electric device. The electric device includes the battery cell in any one of the aforementioned embodiments. The battery cell is configured to provide electric energy.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to an embodiment of the present application;
FIG. 2 is a schematic exploded structural diagram of a battery according to an embodiment of the present application;
FIG. 3 is a schematic structural diagram of a battery module according to an embodiment of the present application;
FIG. 4 is a schematic structural diagram of a shell of a battery cell according to an embodiment of the present application;
FIG. 5 is a schematic diagram of the internal structure of a battery cell according to an embodiment of the present application;
FIG. 6 is a schematic structural diagram of a shell body according to an embodiment of the present application;
FIG. 7 is an enlarged schematic structural diagram of region P in FIG. 6;
FIG. 8 is a schematic structural cutaway diagram of a connecting plate in another shell body according to an embodiment of the present application;
FIG. 9 is a schematic diagram of the internal structure of another battery cell according to an embodiment of the present application;
FIG. 10 is a schematic structural cutaway diagram along A-A in FIG. 9;
FIG. 11 is an enlarged schematic structural diagram of region Q in FIG. 10;
FIG. 12 is a partial schematic structural diagram of still another shell body according to an embodiment of the present application;
FIG. 13 is a partial schematic structural diagram of still another shell body according to an embodiment of the present application;
FIG. 14 is an enlarged schematic structural diagram of region P of still another shell body according to an embodiment of the present application;
FIG. 15 is a schematic structural cutaway diagram along B-B in FIG. 9;
FIG. 16 is a partial schematic structural diagram of still another shell body according to an embodiment of the present application;
FIG. 17 is a partial schematic structural diagram of still another shell body according to an embodiment of the present application;
FIG. 18 is a partial schematic structural diagram of still another shell body according to an embodiment of the present application;
FIG. 19 is a schematic exploded structural diagram of some components in still another battery cell according to an embodiment of the present application;
FIG. 20 is a schematic diagram of the internal structure of a battery according to an embodiment of the present application; and
FIG. 21 is a partial schematic structural cutaway diagram of a battery according to an embodiment of the present application.

In the drawings:
1000: vehicle;
100. battery; 200. controller; 300. motor; 400. case; 41. first case part; 42. second case part; 43. accommodating part; 500. battery module; 600. battery cell; 610. shell;
10. shell body; 11. first side plate; 111. third plate part; 112. fourth plate part; 113. first transition part; 12. second side plate; 121. fifth plate part; 122. sixth plate part; 123. fourth transition part; 13. connecting plate; 131. first plate part; 132. second plate part; 1321. plate main body; 1322. second transition part; 1323. third transition part; 133. fifth transition part; 14. bottom plate;
20. electrode assembly; 21. main body part; 22. tab;
30. first insulating member;
40. second insulating member;
50. end cover;
60. end plate;
B1: central part; B2: edge part;
K1. shell body opening; J. insulating assembly;
A1: clearance space; A2: first recess; A3: second recess; A4: recess space;
M1: first transition surface;
X. first direction; Y. second direction; Z. third direction.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the claimed scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", and "have", and any variations thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector has two surfaces opposite to each other in a thickness direction thereof, and the positive electrode active material is disposed on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be fabricated by forming a metal material (aluminum, aluminum alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium-containing phosphate may include, but are not limited to, at least one of lithium iron phosphate (such as LiFePO4 (also referred to as LFP)), a composite material of lithium iron phosphate and carbon, lithium manganese phosphate (such as LiMnPO4), a composite material of lithium manganese phosphate and carbon, lithium manganese iron phosphate, and a composite material of lithium manganese iron phosphate and carbon.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material base layer and a metal layer. The composite current collector may be fabricated by forming a metal material (copper, copper alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector has two surfaces opposite to each other in a thickness direction thereof, and the negative electrode active material is disposed on either or both of the two opposite surfaces of the negative electrode current collector.

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like.

In some embodiments, the material of the positive electrode current collector may be aluminum, and the material of the negative electrode current collector may be copper.

In some embodiments, the electrode assembly further includes a separator. The separator is disposed between the positive electrode and the negative electrode.

In some embodiments, the separator is a separation film. The present application does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene difluoride, and ceramic.

In some embodiments, the separator is a solid-state electrolyte. The solid-state electrolyte is disposed between the positive electrode and the negative electrode, serving both to transport ions and to isolate the positive electrode and the negative electrode.

In some embodiments, the battery cell further includes an electrolyte that serves to conduct ions between the positive electrode and the negative electrode. The present application does not specifically limit the type of the electrolyte, which can be selected according to needs. The electrolyte may be liquid-state, gel-state, or solid-state.

In some embodiments, the electrode assembly is of a wound structure. The positive electrode plate and the negative electrode plate are wound to form a wound structure.

In some embodiments, the electrode assembly is of a stacked structure.

In some embodiments, the shape of the electrode assembly may be cylindrical, flat, multi-prismatic, or the like.

In some embodiments, the electrode assembly is provided with tabs that can conduct current out from the electrode assembly. The tabs include a positive electrode tab and a negative electrode tab.

In some embodiments, the battery cell may include a shell. The shell is configured to encapsulate components such as electrode assemblies and electrolytes. The shell may be a steel shell, an aluminum shell, a plastic shell (such as polypropylene), a composite metal shell (such as a copper-aluminum composite shell), an aluminum-plastic film, or the like.

In some embodiments, functional components such as electrode terminals may be disposed on the shell. The electrode terminals may be configured to electrically connect to the electrode assembly for outputting or inputting electric energy of the battery cell.

In some embodiments, a current collecting member may be disposed within the shell, and the electrode assembly may be electrically connected to the shell or the electrode terminals disposed on the shell via the current collecting member.

As an example, the battery cell may be a cylindrical battery cell, a prismatic battery cell, a pouch battery cell, or a battery cell of other shapes. The prismatic battery cell includes a square-shell battery cell, a blade-shaped battery cell, and a multi-prismatic battery, and the multi-prismatic battery is, e.g., a hexagonal prismatic battery. This is not particularly limited in the present application.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of a crossmember and a longitudinal member of the vehicle.

In some embodiments, the battery may be an energy storage device. The energy storage device includes an energy storage container, an energy storage electrical cabinet, and the like.

In the related art, a shell usually includes a shell body and an end cover. The shell body includes a first side plate, a second side plate, and a connecting plate connecting the first side plate and the second side plate. The connecting plate usually includes an arc-shaped structure and has lower structural strength than the first side plate and the second side plate. On this basis, after the shell body is welded and fixed to the end cover, stress concentration is likely to occur near the position where the connecting plate is welded to the end cover due to factors such as the expansion of the electrode assembly. This may lead to cracking and breakage at the connecting plate, affecting the reliability of the battery cell.

In view of the above technical problems, the present application provides a shell body, a battery cell, a battery, and an electric device. The maximum thickness of the second plate part is set to be greater than the maximum thickness of the first plate part, thereby reducing the risk of cracking at the connecting plate and improving the use reliability of the battery cell.

The technical solutions described in the embodiments of the present application are applicable to batteries and electric devices using batteries. The electric device is, e.g., a mobile phone, a portable device, a laptop computer, an electric bicycle, an electric vehicle, a ship, a spacecraft, an electric toy, or an electric tool. The spacecraft is, e.g., an airplane, a rocket, a space shuttle, or a spaceship. The electric toy includes, e.g., a stationary or mobile electric toy, specifically a game console, an electric car toy, an electric ship toy, and an electric airplane toy. The electric tool includes, e.g., a metal cutting electric tool, a grinding electric tool, an assembly electric tool, and a railway electric tool, specifically an electric drill, an electric grinder, an electric wrench, an electric screwdriver, an electric hammer, an impact drill, a concrete vibrator, or an electric planer.

The battery cell described in the embodiments of the present application is not limited to being applicable to the electric devices described above, but for the sake of brevity in description, the following embodiments are described by taking an electric vehicle as an example.

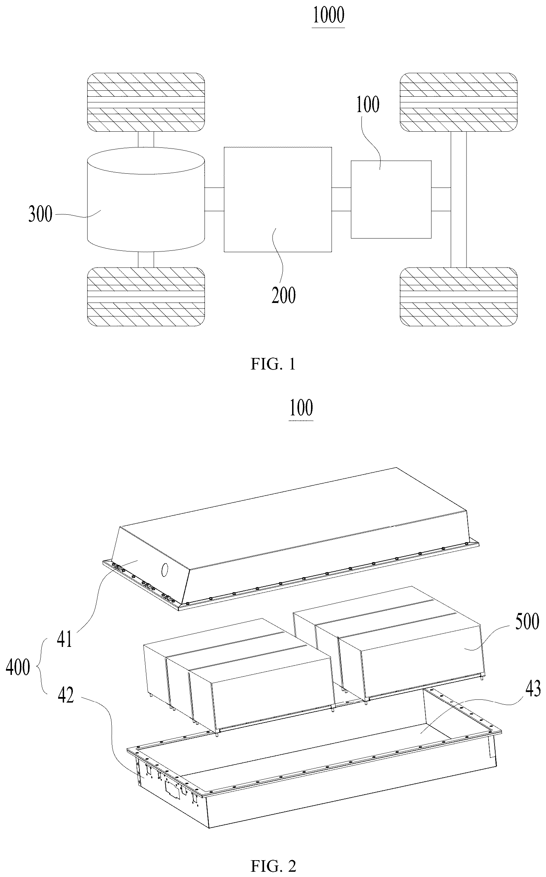

Referring to FIG. 1, FIG. 1 is a simple schematic diagram of a vehicle 1000 according to an embodiment of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 may be disposed inside the vehicle 1000. Specifically, for example, the battery 100 may be disposed at the bottom, the head, or the rear of the vehicle 1000. The battery 100 may be configured to power the vehicle 1000. For example, the battery 100 may serve as an operation power source of the vehicle 1000. The vehicle 1000 may further include a controller 200 and a motor 300. For example, the controller 200 is configured to control the battery to supply power to the motor 300. The battery may be configured for the starting, navigation, etc., of the vehicle 1000. Certainly, the battery 100 may also be configured to drive the vehicle 1000, thus driving the vehicle 1000 instead of or in part instead of fuel or natural gas.

FIG. 2 is an exploded schematic view of a battery according to some embodiments of the present application. As shown in FIG. 2, the battery 100 includes a case 400 and a battery cell (not shown). The battery cell is accommodated in the case 400.

The case 400 is configured to accommodate the battery cell, and the case 400 may be of various structures. In some embodiments, the case 400 may include a first case part 41 and a second case part 42. The first case part 41 and the second case part 42 are mutually lidded with each other, and the first case part 41 and the second case part 42 jointly define an accommodating part 43 for accommodating the battery cell. The second case part 42 may be of a hollow structure with one end open, the first case part 41 is of a plate-like structure, and the first case part 41 lids the open side of the second case part 42 to form the case having the accommodating part 43. The first case part 41 and the second case part 42 may each also be of a hollow structure with one side open, and the open side of the first case part 41 lids the open side of the second case part 42 to form the case 400 having the accommodating part 43. Certainly, the first case part 41 and the second case part 42 may be of various shapes, such as cylindrical and rectangular parallelepiped.

In the battery 100, one or a plurality of battery cells may be provided. If a plurality of battery cells are provided, the plurality of battery cells may be connected in series, in parallel, or in series-parallel. The series-parallel connection means that both series connection and parallel connection are present in the connection of the plurality of battery cells. The plurality of battery cells may be directly connected in series, in parallel, or in series-parallel, and then the whole formed by the plurality of battery cells is accommodated in the case 400. Certainly, the situation may be that the plurality of battery cells are first connected in series, in parallel, or in series-parallel to form battery modules 500, and then the plurality of battery modules 500 are connected in series, in parallel, or in series-parallel to form a whole and accommodated in the case 400.

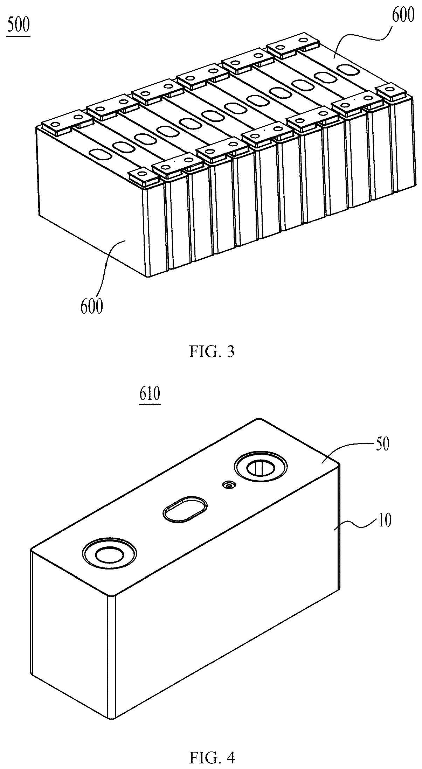

FIG. 3 is a schematic structural diagram of the battery module 500 shown in FIG. 2.

In some embodiments, as shown in FIG. 3, a plurality of battery cells 600 are provided, and the plurality of battery cells 600 are first connected in series, in parallel, or in series-parallel to form a battery module 500. The plurality of battery modules 500 are then connected in series, in parallel, or in series-parallel to form a whole and accommodated in the case.

FIG. 4 is a schematic structural diagram of a battery cell. The battery cell 600 includes a shell 610 and an electrode assembly 20. The shell 610 is of a hollow structure and is configured to form an accommodating space for accommodating the electrode assembly 20 and other components. The electrode assembly 20 is the main component for providing electric energy in the battery cell 600. The shape of the shell 610 may be determined according to the specific shape of the electrode assembly 20. For example, if the electrode assembly 20 is of a cylindrical structure, a cylindrical shell may be used; if the electrode assembly 20 is of a rectangular parallelepiped structure, a rectangular parallelepiped shell may be used.

Referring to FIG. 4, the shell 610 may include a shell body 10 and an end cover 50. The shell body 10 is provided with a shell body opening, and the end cover 50 is configured to lid the shell body opening of the shell 10. The structure of the shell body will be described next with reference to the drawings.

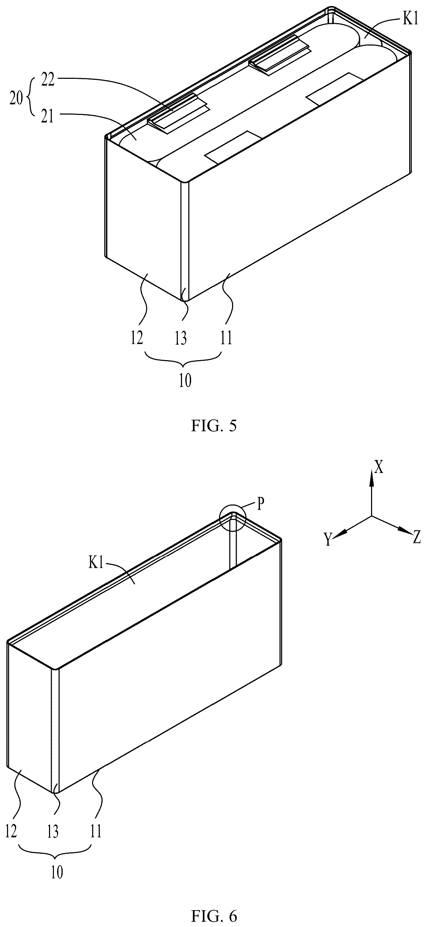

Referring to FIG. 5 to FIG. 8, an end part of the shell body 10 in the first direction X is provided with a shell body opening K1, the shell body 10 includes a first side plate 11 and a second side plate 12 arranged along the circumferential direction of the shell body opening K1, the connecting plate 13 is connected to the first side plate 11 and the second side plate 12, and at least part of the outer surface of the connecting plate 13 includes an arc-shaped surface. The connecting plate 13 includes a first plate part 131 and a second plate part 132, and in the first direction X, the second plate part 132 is located on a side of the first plate part 131 proximal to the shell body opening K1. The maximum thickness of the second plate part 132 is greater than or equal to the maximum thickness of the first plate part 131.

The shell body 10 is provided with a shell body opening K1 in the first direction X. There may be one or two shell body openings K1, that is, the situation may be that only one end of the shell body 10 in the first direction X is provided with a shell body opening K1 or both opposite ends of the shell body 10 in the first direction X may each be provided with a shell body opening K1. The outer contour of the shell body 10 is of various forms. Optionally, the shell body 10 may be of a cylindrical structure, or the shell body 10 may be of a rectangular parallelepiped structure or the like.

The shell body 10 includes a first side plate 11, a second side plate 12, and a connecting plate 13. The first side plate 11 and the second side plate 12 are arranged along the circumferential direction of the shell body opening K1. There may be one or a plurality of first side plates 11, and the number of the first side plates may be set according to the shape of the shell body 10. Similarly, there may be one or a plurality of second side plates 12, and the number of the second side plates may be set according to the shape of the shell body 10. In addition, based on different specific shapes of the shell body 10, the area size corresponding to the outer surface of the first side plate 11 may be greater than the area size corresponding to the outer surface of the second side plate 12, or the area size corresponding to the outer surface of the first side plate 11 may be less than or equal to the area size corresponding to the outer surface of the second side plate 12.

The first side plate 11 and the second side plate 12 are separately disposed on different sides of the shell body opening K1, and the connecting plate 13 is connected to the first side plate 11 and the second side plate 12. Further, at least part of the outer surface of the connecting plate 13 includes an arc-shaped surface. The "outer surface of the connecting plate 13" mentioned here refers to the surface of the connecting plate 13 facing away from the electrode assembly 20. The outer surface of the connecting plate 13 may be an arc-shaped surface as a whole or may be only partially arc-shaped. Meanwhile, the inner surface of the connecting plate 13 may include an arc-shaped surface, or may not include an arc-shaped surface. Optionally, the connecting plate 13 is bent to be of an arc shape, so that the outer surface thereof includes an arc-shaped surface.

In the embodiments of the present application, because the outer surface of the connecting plate 13 is configured to include an arc-shaped surface, a rounded transition between the first side plate 11 and the second side plate 12 is achieved by means of the arc-shaped surface. Meanwhile, the presence of the arc-shaped surface helps improve the flatness of the outer surface of the shell body 10 and thereby enhance the visual appearance of the shell body 10.

The number of the connecting plates 13 is generally determined by both the first side plate 11 and the second side plate 12. For example, if the shell body 10 includes only one first side plate 11 and one second side plate 12, there is also one connecting plate 13. If the shell body 10 includes one first side plate 11 and two second side plates 12 at the same time, there are two connecting plates 13, which are respectively located at two ends of the first side plate 11. If the shell body 10 includes two first side plates 11 and two second side plates 12 at the same time, there are four connecting plates 13, and the four connecting plates 13 are configured to achieve end-to-end connection between the two first side plates 11 and the two second side plates 12 in sequence.

The connecting plate 13 includes a first plate part 131 and a second plate part 132 arranged side by side in the first direction X, and the second plate part 132 is located on a side of the first plate part 131 proximal to the shell body opening K1. The first plate part 131 may be disposed adjacent to the second plate part 132 in the first direction X, or the first plate part 131 may also be spaced apart from the second plate part 132 in the first direction X.

In the embodiments of the present application, the second plate part 132 is disposed closer to the shell body opening K1 than the first plate part 131. During the process in which the shell body 10 is fitted and connected to the end cover 50, at least part of the structure of the second plate part 132 in the connecting plate 13 is welded and fixed to the end cover 50. Further, the surface of the second plate part 132 facing away from the first plate part 131 is the outer surface of the connecting plate 13 in the first direction X.

On this basis, in the embodiments of the present application, the maximum thickness of the second plate part 132 is set to be not less than the maximum thickness of the first plate part 131, thereby reducing the risk of cracking or breakage at positions near the position where the second plate part 132 is welded to the end cover 50 caused by shell body deformation or battery cell vibration due to factors such as expansion stress of the electrode assembly 20, thus improving the use reliability of the battery cell 600.

It should be noted that, depending on actual needs, the thicknesses of the second plate part 132 at different positions may be kept equal, or the thicknesses of the second plate part 132 at different positions may also be kept different. Similarly, the thicknesses of the first plate part 131 at different positions may be kept equal, or the thicknesses of the first plate part 131 at different positions may also be kept different. On this basis, in the embodiments of the present application, what only needs to be met is that the maximum thickness of the second plate part 132 is greater than the maximum thickness of the first plate part 131.

In some embodiments, as shown in FIG. 5 to FIG. 7, the first side plate 11 includes a third plate part 111 and a fourth plate part 112. In the first direction X, the fourth plate part 112 is located on a side of the third plate part 111 proximal to the shell body opening K1. The maximum thickness of the fourth plate part 112 is greater than the maximum thickness of the third plate part 111.

The first side plate 11 includes a third plate part 111 and a fourth plate part 112, and the third plate part 111 and the fourth plate part 112 are arranged side by side in the first direction X. Optionally, in the circumferential direction of the shell body 10, the third plate part 111 is disposed corresponding to the first plate part 131, and the fourth plate part 112 is disposed corresponding to the second plate part 132. In the first direction X, the fourth plate part 112 is located on a side of the third plate part 111 proximal to the shell body opening K1. Further, the third plate part 111 may be disposed adjacent to the fourth plate part 112, or the third plate part 111 may also be spaced apart from the fourth plate part 112. The dimension of the fourth plate part 112 in the first direction X may be the same as or different from the dimension of the second plate part 132 in the first direction X.

Similar to the second plate part 132 of the connecting plate 13, the fourth plate part 112 of the first side plate 11 is also welded and fixed to the end cover 50. On this basis, in the embodiments of the present application, the maximum thickness of the fourth plate part 112 is set to be greater than the maximum thickness of the third plate part 111, so that the fourth plate part 112 can have greater structural strength than the third plate part 111, thereby reducing the risk of cracking or breakage at the position where the fourth plate part 112 is welded to the end cover 50 caused by the expansion stress of the electrode assembly 20, thus improving the use reliability of the battery cell 600.

It should be noted that, depending on actual needs, the thicknesses of the third plate part 111 at different positions may be kept equal, or the thicknesses of the third plate part 111 at different positions may also be kept different. Similarly, the thicknesses of the fourth plate part 112 at different positions may be kept equal, or the thicknesses of the fourth plate part 112 at different positions may also be kept different. On this basis, in the embodiments of the present application, what only needs to be met is that the maximum thickness of the fourth plate part 112 is greater than the maximum thickness of the third plate part 111.

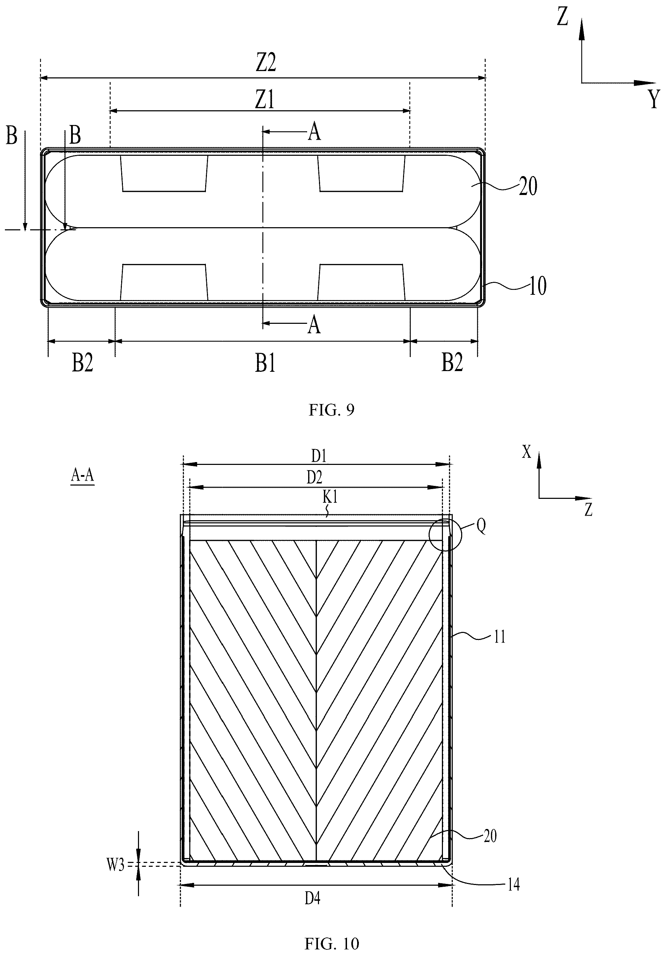

In some embodiments, referring to FIG. 9 to FIG. 11 together, the inner surface of the third plate part 111 is arranged to be concave relative to the inner surface of the fourth plate part 112; and/or the inner surface of the first plate part 131 is arranged to be concave relative to the inner surface of the second plate part 132.

The first side plate 11 has an inner surface and an outer surface in the thickness direction thereof. The inner surface is the surface of the first side plate 11 facing the electrode assembly 20, and the outer surface is the surface of the first side plate 11 forming the outer contour of the shell body 10. Based on different shapes of the shell body 10, the inner surface and the outer surface of the first side plate 11 may be of a plurality of forms. For example, the outer surface of the first side plate 11 may have a specific radian, or the outer surface of the first side plate 11 may be of a planar structure. The thickness direction of the first side plate 11 is the Z direction shown in FIG. 6.

During the process of the electrode assembly 20 entering the shell, the electrode assembly 20 will be first moved from the outside to the positions corresponding to the fourth plate part 112 and the second plate part 132 in the shell body 10 and then moved further downward to the positions corresponding to the third plate part 111 and the first plate part 131 in the shell body 10. Therefore, the presence of the fourth plate part 112 and the second plate part 132 will generally affect the process of the electrode assembly 20 entering the shell, and during the use of the battery cell 600, the third plate part 111 and the first plate part 131 will be arranged around the outer peripheral side of the electrode assembly 20.

In the related art, to improve the energy density of the battery cell 600, it is necessary to ensure that the electrode assembly 20 maintains a certain size while the size of the shell body 10 cannot be too large. Consequently, the distance between the electrode assembly 20 and both the third plate part 111 and the first plate part 131 is generally small. Thus, when the electrode assembly 20 expands during charging and discharging, the spacing margin between at least one of the first plate part 131 and the third plate part 111 and the electrode assembly 20 can not meet the expansion requirements of the electrode assembly 20. As a result, during the use of the battery cell 600, the first plate part 131 and the third plate part 111 are prone to deformation due to the expansion of the electrode assembly 20, which easily causes the shell body 10 to crack, resulting in the risk of failure of the battery cell 600.

In view of this, in the embodiments of the present application, the inner surface of the third plate part 111 is arranged to be concave relative to the inner surface of the fourth plate part 112, or the inner surface of the first plate part 131 is arranged to be concave relative to the inner surface of the second plate part 132, so as to form a clearance space A1 in at least one of the first side plate 11 and the connecting plate 13. The clearance space A1 is arranged corresponding to the first plate part 131 or the third plate part 111, and the clearance space A1 is configured to accommodate part of the structure of the battery cell 600 located in the shell body 10. The "part of the structure located in the shell body 10" mentioned here includes, but is not limited to, part of the structure of the electrode assembly 20 and other components located in the shell body 10. For example, an insulating component may be disposed between the electrode assembly 20 and the third plate part 111, and the insulating component may be at least partially located in the clearance space A1.

In the embodiments of the present application, by arranging at least one of the third plate part 111 and the first plate part 131 to be concave, the clearance space A1 can be formed. The clearance space A1 can accommodate part of the structure of the battery cell 600, so that the spacing between the third plate part 111 or the first plate part 131 and the electrode assembly 20 can be increased as much as possible without reducing the size of the electrode assembly 20. Thus, when the electrode assembly 20 expands, the clearance space A1 can accommodate certain degree of expansion of the electrode assembly 20, thereby reducing the degree of the deformation of the third plate part 111 or the first plate part 131 caused by the expansion of the electrode assembly 20, reducing the risk of cracks in the shell body 10, and thus improving the use reliability of the shell body 10 and the corresponding battery cell 600.

It should be noted that although the inner surface of the third plate part 111 is arranged to be concave relative to the inner surface of the fourth plate part 112, the outer surface of the third plate part 111 may be arranged to be flush with the outer surface of the fourth plate part 112, or the outer surface of the third plate part 111 may also be arranged to be concave or convex relative to the outer surface of the fourth plate part 112. Similarly, the outer surface of the first plate part 131 may also be arranged to be flush with the outer surface of the second plate part 132, or the outer surface of the first plate part 131 may also be arranged to be concave or convex relative to the outer surface of the second plate part 132.

In some embodiments, the outer surface of the third plate part 111 is flush with the outer surface of the fourth plate part 112; and/or the outer surface of the first plate part 131 is flush with the outer surface of the second plate part 132.

In the embodiments of the present application, by arranging the outer surface of the third plate part 111 to be flush with the outer surface of the fourth plate part 112, the flatness of the outer surface of the first side plate 11 can be improved, reducing the risk of damage caused by the protruding part of the structure of the outer surface of the first side plate 11 being in collision with other components, and thereby improving the use reliability of the first side plate 11. Similarly, by arranging the outer surface of the first plate part 131 to be flush with the outer surface of the second plate part 132, the flatness of the outer surface of the connecting plate 13 can be improved, reducing the risk of damage caused by the protruding part of the structure of the outer surface of the connecting plate 13 being in collision with other components, and thereby improving the use reliability of the connecting plate 13.

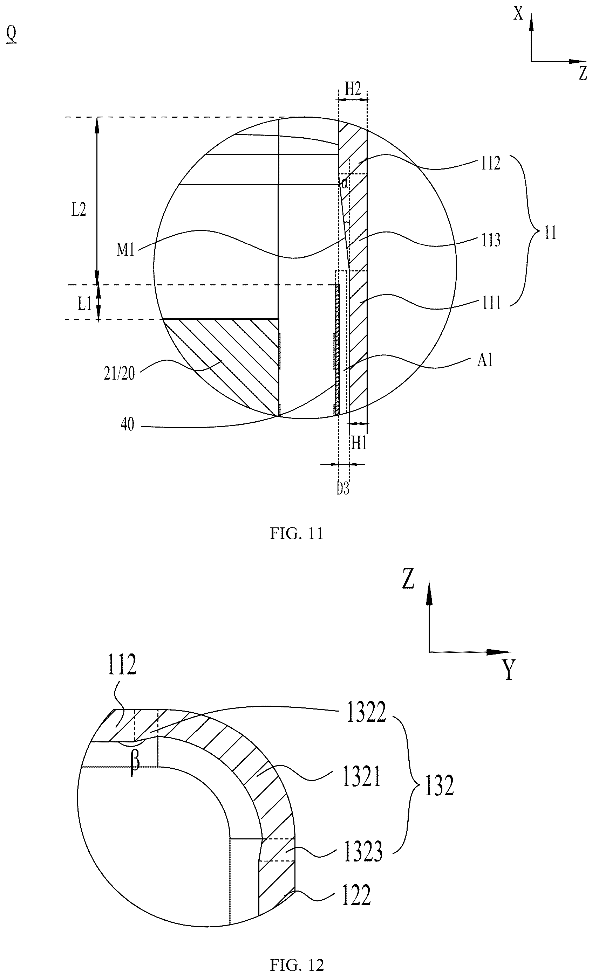

In some embodiments, as shown in FIG. 11, the maximum thickness of the third plate part 111 is H1, the maximum thickness of the fourth plate part 112 is H2, and H1 and H2 satisfy that 0.05 mm ≤ H2 - H1 ≤ 0.3 mm. Optionally, the value of H2 - H1 is equal to one of 0.05 mm, 0.1 mm, 0.15 mm, 0.2 mm, and 0.3 mm.

As can be seen from the above content, the inner surface of the third plate part 111 is arranged to be concave relative to the inner surface of the fourth plate part 112 to form the clearance space A1 configured to accommodate part of the structure. On this basis, the thickness difference between the third plate part 111 and the fourth plate part 112 is positively correlated with the size of the clearance space A1. Specifically, the smaller the thickness difference between the third plate part 111 and the fourth plate part 112 is, the smaller the size of the corresponding clearance space A1 in the thickness direction of the third plate part 111 is. Similarly, the larger the thickness difference between the third plate part 111 and the fourth plate part 112 is, the larger the size of the corresponding clearance space A1 in the thickness direction of the third plate part 111 is. The thickness direction of the third plate part 111 is the thickness direction of the first side plate 11.

Further, in the embodiments of the present application, the maximum thickness H1 of the third plate part 111 and the maximum thickness H2 of the fourth plate part 112 are set to be H2 - H1 ≤ 0.3 mm, that is, the thickness difference between the third plate part 111 and the fourth plate part 112 is limited to be not greater than 0.3 mm. This design can mitigate the issue of too low reliability of the third plate part 111 caused by the too small thickness of the third plate part 111 while also reducing the risk of difficulty in allowing the electrode assembly 20 to enter the shell caused by the too large thickness of the fourth plate part 112. It achieves comprehensive consideration of the difficulty in fabricating the battery cell 600 and the use reliability and exhibits strong practicability.

In addition, if the thickness difference H2 -H1 between the third plate part 111 and the fourth plate part 112 is too small, the clearance space A1 may not be able to accommodate the component structures in the battery cell 600. In view of this, in the embodiments of the present application, the thickness difference between the third plate part 111 and the fourth plate part 112 is set to be not less than 0.05 mm, so as to ensure that at least part of the structure in the battery cell 600 can be accommodated in the clearance space A1, thereby reducing the degree of the deformation of the third plate part 111 and meanwhile improving the utilization rate of the internal space of the battery cell 600 and the energy density of the battery cell 600.

In some embodiments, the first side plate 11 further includes a first transition part 113. The first transition part 113 is located between the third plate part 111 and the fourth plate part 112. In the first direction X and a direction from the third plate part 111 toward the fourth plate part 112, the thickness of the first transition part 113 gradually increases.

The first transition part 113 is located between the third plate part 111 and the fourth plate part 112 in the first direction X, and the first transition part 113 is configured to achieve transition from the third plate part 111 to the fourth plate part 112. In the first direction X, the first transition part 113 may be disposed adjacent to the third plate part 111, or the first transition part 113 may also be spaced apart from the third plate part 111. Similarly, in the first direction X, the first transition part 113 may be disposed adjacent to the fourth plate part 112, or the first transition part 113 may also be spaced apart from the fourth plate part 112.

In the embodiments of the present application, the first transition part 113 is located between the third plate part 111 and the fourth plate part 112. Because the inner surface of the third plate part 111 may be arranged to be concave relative to the inner surface of the fourth plate part 112, in the embodiments of the present application, by allowing the thickness of the first transition part 113 to gradually increase in a direction from the third plate part 111 toward the fourth plate part 112 to achieve a smooth transition between the third plate part 111 and the fourth plate part 112 by means of the first transition part 113, the difficulty in molding the shell body 10 is reduced, the stress concentration is reduced, and thereby the risk of cracking of the first side plate 11 is reduced.

In some embodiments, as shown in FIG. 11, the first transition part 113 includes a first transition surface M1 facing the interior of the shell body 10, the included angle between the first transition surface M1 and the first direction X is α, and α satisfies that 0 < α ≤ 60°. Optionally, the value of α is one of 10°, 15°, 20°, 40°, and 60°.

The first transition surface M1 is the surface of the first transition part 113 facing the electrode assembly 20. As can be seen from the above content, the clearance space A1 may be configured to accommodate at least part of the structure in the battery cell 600. Optionally, the battery cell 600 may include a second insulating member 40. The second insulating member 40 is located between the first side plate 11 and the electrode assembly 20 and is configured to insulate the electrode assembly 20 from the first side plate 11, where at least part of the second insulating member 40 may be located in the clearance space A1.

Further, during the use of the battery cell 600, the electrode assembly 20, the second insulating member 40, or other component structures inside the battery cell 600 are prone to interference contact with the first transition surface M1 due to factors such as shaking. In this case, if the inclination angle of the first transition surface M1 relative to the first direction X is too large, the boundary between the first transition surface M1 and the inner surface of the third plate part 111 and the boundary between the first transition surface M1 and the inner surface of the fourth plate part 112 are likely to be too sharp, thereby easily causing the risk of puncturing the electrode assembly 20, the second insulating member 40, and the like.

In addition, during the process of fabricating the shell body 10, drafting is generally required. Drafting is generally used to add a slope to a vertical face of a model, a component, a mold, or a die, so as to separate the component or the model from its mold or die by means of a drafted face. On this basis, if the included angle between the first transition surface M1 and the first direction X is too large, the drafting difficulty associated with the fabrication of the shell body 10 may also be increased, which is not conducive to the fabrication of the shell body 10.

In view of this, in the embodiments of the present application, the included angle α between the first transition surface M1 and the first direction X is set to be not greater than 60°, thereby reducing the risk of puncturing the electrode assembly 20, the first insulating member 30, etc., and improving the use reliability of the battery cell 600. Meanwhile, this design also helps reduce the drafting difficulty associated with the fabrication of the shell body 10, thereby improving the production yield of the shell body 10.

In some embodiments, 2° ≤ α ≤ 40°. Optionally, the value of a is 2°, 15°, 20°, 30°, 40°, or the like.

In the embodiments of the present application, by setting the included angle α between the first transition surface M1 and the first direction X to be not greater than 40°, the risk of puncturing the electrode assembly 20, the first insulating member 30, etc., is further reduced, and the use reliability of the battery cell 600 is improved. Meanwhile, this also helps further reduce the drafting difficulty associated with the fabrication of the shell body 10, thereby improving the production yield of the shell body 10. Meanwhile, in the embodiments of the present application, α is set to be not less than 2° to ensure that the third plate part 111 can have a certain thickness dimension and thereby meet the reliability requirements of the battery cell 600.

In some embodiments, the maximum thickness of the second plate part 132 is H3, the maximum thickness of the fourth plate part 112 is H2, and H2 and H3 satisfy that 0.1 mm ≤ H3 ≤ 0.8H2.

In view of this, in the embodiments of the present application, the maximum thickness H3 of the second plate part 132 is set to be not less than 0.1 mm to ensure that the second plate part 132 can have a certain thickness dimension and thereby improve its use reliability. Meanwhile, the maximum thickness H3 of the second plate part 132 is set to be not greater than 0.8H2 to reduce the risk of stress concentration at the connecting plate 13 during the process of fabricating the shell body 10 and reduce the probability of cracking at the connecting plate 13.

In some embodiments, the maximum thickness of the second plate part 132 is not greater than the maximum thickness of the fourth plate part 112; and/or the difference between maximum thicknesses corresponding to the second plate part 132 and the first plate part 131 is not greater than the difference between maximum thicknesses corresponding to the fourth plate part 112 and the third plate part 111.

During the process of the electrode assembly 20 entering the shell, the electrode assembly 20 will be first moved from the outside to the position corresponding to the second plate part 132 in the shell body 10 and then moved further downward to the position corresponding to the first plate part 131 in the shell body 10. That is, after the electrode assembly 20 enters the shell, the electrode assembly 20 is disposed corresponding to the first plate part 131.

Further, because the outer surface of the connecting plate 13 may include an arc-shaped surface, during the drafting of the shell body 10, the risk of deformation and flanging of the connecting plate 13 at the position of the second plate part 132 is increased as the material has nowhere to flow. In addition, during drafting, stress is likely to concentrate at the connecting plate 13. Thus, there may be a problem of cracking of the connecting plate 13.

In view of this, in the embodiments of the present application, the maximum thickness of the second plate part 132 may be set to be not greater than the maximum thickness of the fourth plate part 112, so that the thickness of the second plate part 132 is relatively small. In this way, the drafting difficulty of the shell body 10 at the position of the connecting plate 13 is reduced, the risk of flanging and cracking of the connecting plate 13 is reduced, and the production yield of the shell body 10 is increased.

Alternatively, in the embodiments of the present application, the difference between the maximum thicknesses corresponding to the second plate part 132 and the first plate part 131 may be set to be not greater than the difference between the maximum thicknesses corresponding to the fourth plate part 112 and the third plate part 111. That is, the difference between the maximum thickness of the second plate part 132 and the maximum thickness of the first plate part 131 is not greater than the difference between the maximum thickness of the fourth plate part 112 and the maximum thickness of the third plate part 111. This design enables the increased thickness of the second plate part 132 relative to the first plate part 131 to be not greater than the increased thickness of the fourth plate part 112 relative to the third plate part 111, which also helps reduce the drafting difficulty of the shell body 10 at the position of the connecting plate 13, reduce the risk of flanging and cracking of the connecting plate 13, and improve the production yield of the shell body 10.

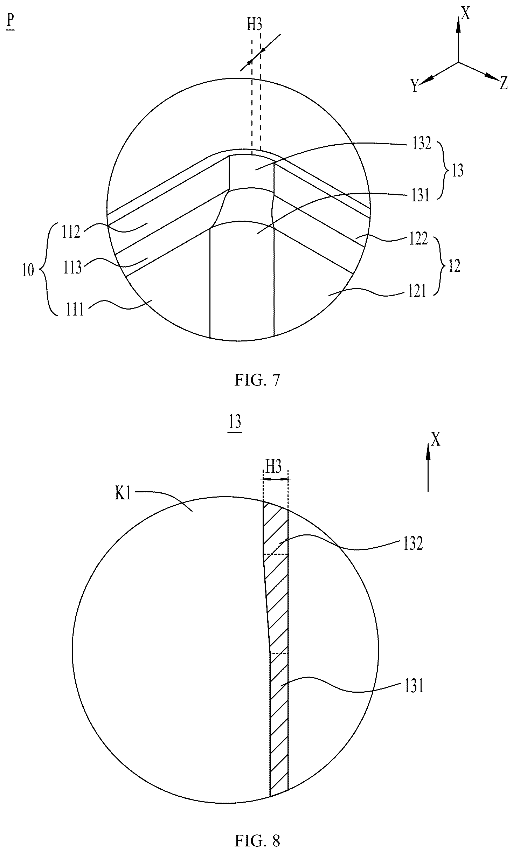

In some embodiments, as shown in FIG. 7, FIG.9, and FIG. 11, two second side plates 12 are disposed opposite to each other in the second direction Y, and the first direction X intersects with the second direction Y. The fourth plate part 112 includes a central part B1 and an edge part B2 located on at least one side of the central part B1 in the second direction Y. The edge part B2 is connected to the second plate part 132, and the maximum thickness of the edge part B2 is less than the maximum thickness of the central part B1. In FIG. 9, the relative positions of the central part B1 and the edge part B2 are indicated by arrows.

The fourth plate part 112 includes a central part B1 and an edge part B2. The edge part B2 is located on at least one side of the central part B1 in the second direction Y. Depending on actual needs, the number of the edge parts B2 may be one or two. When the number of the edge parts B2 is two, the two edge parts B2 are respectively disposed on both sides of the central part B1 in the second direction Y.

The maximum thickness of the edge part B2 is less than the maximum thickness of the central part B1. Therefore, the maximum thickness of the fourth plate part 112 is the maximum thickness of the central part B1. The maximum thickness of the edge part B2 may be greater than the maximum thickness of the third plate part 111, or the maximum thickness of the edge part B2 may be equal to the maximum thickness of the third plate part 111.

In the embodiments of the present application, the maximum thickness of the edge part B2 of the fourth plate part 112 is less than the maximum thickness of the central part B1, and the presence of the edge part B2 enables the fourth plate part 112 to be partially unthickened or partially thickened to a relatively small extent. This helps reduce the drafting difficulty associated with the fourth plate part 112 and increase the production yield of the shell body 10.

In some embodiments, the dimension of the central part B1 in the second direction Y is Z1, the dimension of the shell body 10 in the second direction Y is Z2, and Z1 and Z2 satisfy that 0.5 ≤ Z1/Z2.

As can be seen from the above content, the presence of the edge part B2 helps reduce the drafting difficulty associated with the fourth plate part 112. If the size of the edge part B2 is too large, the size of the central part B1 will be too small, thereby affecting the structural strength of the fourth plate part 112, causing a problem such as cracking or breakage after the fourth plate part 112 and the end cover 50 are welded, and possibly causing the risk of laser leakage at the position of the fourth plate part 112 during welding of the shell body 10 and the end cover 50.

In view of this, in the embodiments of the present application, the dimension of the central part B1 in the second direction Y is limited, so that the dimension Z1 of the central part B1 in the second direction Y is not less than half of the dimension of the shell body 10 in the second direction Y. In this way, the structural reliability of the fourth plate part 112 is improved, and the risk of cracking or breakage at the fourth plate part 112 is reduced.

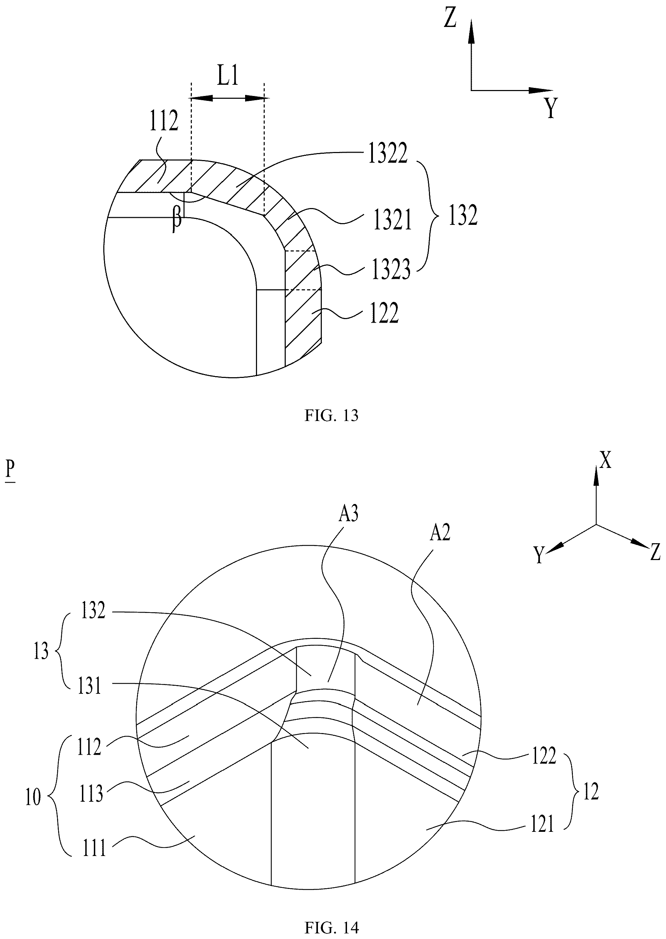

In some embodiments, referring to FIG. 12 and FIG. 13, the included angle between the inner surface of the second plate part 132 and the inner surface of the fourth plate part 112 is β, and β satisfies that 155° ≤ β ≤ 270°. Optionally, the value of β is equal to one of 155°, 175°, 180°, 210°, 250°, and 270°.

As can be seen from the above content, the outer surface of the second plate part 132 includes an arc-shaped surface. On this basis, to enable the thickness of the second plate part 132 to be less than the thickness of the fourth plate part 112, the value of the included angle β between the inner surface of the fourth plate part 112 and the inner surface of the second plate part 132 needs to be limited. Further, experiments show when β is less than 155°, the thickness dimension of the second plate part 132 is relatively large, which has less impact on improving the drafting difficulty at the connecting plate 13 and reducing the risk of cracking. In view of this, in the embodiments of the present application, β is set to be not less than 155° to help reduce the thickness of the second plate part 132, thereby improving the drafting difficulty and reducing the risk of cracking.

In addition, experiments show when β is greater than 270°, the difficulty in fabricating the shell body 10 is significantly increased, resulting in a decrease in molding efficiency of the shell body 10. In addition, this adversely affects the welding between the shell body 10 and the end cover 50, resulting in insufficient strength of the weld seam formed through welding. In view of this, in the embodiments of the present application, β is further set to be not greater than 270° to reduce the difficulty in fabricating the shell body 10, improve the molding efficiency of the shell body 10, and help enhance the strength of the weld seam formed through welding.

In conclusion, in the embodiments of the present application, by setting β to be not less than 155°, the thickness of the second plate part 132 can be reduced, thereby improving the drafting difficulty and reducing the risk of cracking. Further, β is further set to be not greater than 270° to reduce the difficulty in fabricating the shell body 10, improve the molding efficiency of the shell body 10, and help enhance the strength of the weld seam formed through welding.

In some embodiments, as shown in FIG. 12 and FIG. 13, the second plate part 132 includes a plate main body 1321 and a second transition part 1322 connecting the plate main body 1321 and the fourth plate part 112. The maximum thickness of the plate main body 1321 is less than the maximum thickness of the second transition part 1322. In a direction gradually approaching the fourth plate part 112, the thickness of the second transition part 1322 exhibits a gradually increasing trend.

Depending on actual needs, the thickness of the fourth plate part 112 may be greater than the thickness of the second plate part 132. If the thickness of the second plate part 132 suddenly decreases at the boundary between the fourth plate part 112 and the second plate part 132, the structural strength at the boundary between the fourth plate part 112 and the second plate part 132 is easily too low, and the difficulty in fabricating the shell body 10 is also increased, which is not conducive to actual production and use.

However, in the embodiments of the present application, the second transition part 1322 and the plate main body 1321 are provided in the second plate part 132. The plate main body 1321 is the main part of the second plate part 132, and the maximum thickness of the plate main body 1321 is less than the maximum thickness of the second transition part 1322. The plate body 132 may be connected to the fourth plate part 112 by means of the second transition part 1322.

Further, to mitigate sudden thickness changes at some positions in the shell body 10, in the embodiments of the present application, the thickness of the second transition part 1322 is set to exhibit a gradually increasing trend in the direction approaching the fourth plate part 112, thus achieving reliable transition between the fourth plate part 112 and the plate main body 1321, improving the reliability at the boundary between the fourth plate part 112 and the second plate part 132, and reducing the difficulty in fabricating the shell body 10.

In some embodiments, as shown in FIG. 13, two second side plates 12 are disposed opposite to each other in the second direction Y, and the first direction X intersects with the second direction Y. The dimension of the second transition part 1322 in the second direction Y is L1, and L1 satisfies that 1 mm ≤ L1 ≤ 15 mm. Optionally, L1 is 1 mm, 2 mm, 5 mm, 8 mm, 10 mm, 15 mm, or the like.

The two second side plates 12 are disposed opposite to each other in the second direction Y. Optionally, the second direction Y may be perpendicular to the first direction X. Further, if the outer surface of the first side plate 11 is a flat surface, the second direction Y may be parallel to the outer surface of the first side plate 11. In the second direction Y, the dimension of the second transition part 1322 is L1. In addition, in a direction approaching the fourth plate part 112, the thickness of the second transition part 1322 exhibits a gradually increasing trend. On this basis, if the value of L1 is too large, the thickness at the boundary between the second transition part 1322 and the plate main body 1321 is likely to be too small, which is not conducive to the reliability of welding between the shell body 10 and the end cover 50. If the value of L1 is too small, the thickness change of the second transition part 1322 is too large, and the drafting process of the shell body 10 is likely to be adversely affected.

In view of this, in the embodiments of the present application, the dimension L1 of the second transition part 1322 is set to be not less than 1 mm, thereby helping reduce the drafting difficulty of the shell body 10 and improving the fabrication efficiency of the shell body 10. Meanwhile, the dimension L1 of the second transition part 1322 is also set to be not greater than 15 mm, thereby helping improve the welding strength between the shell body 10 and the end cover 50 and improving the use reliability of the subsequently formed battery cell 600.

In some embodiments, the inner surface of the second transition part 1322 includes an arc-shaped structure; and/or the inner surface of the second transition part 1322 includes a planar structure.

In the embodiments of the present application, the second transition part 1322 is configured to connect the fourth plate part 112 and the plate main body 1321. On this basis, to improve the structural reliability of the shell body 10, in the embodiments of the present application, the inner surface of the second transition part 1322 is configured to include at least one of an arc-shaped structure and a planar structure. A rounded transition between the fourth plate part 112 and the plate main body 1321 may be achieved by means of the arc-shaped structure, and a smooth transition between the fourth plate part 112 and the plate main body 1321 may be achieved by means of the planar structure. In this way, the structural reliability of the shell body 10 at the boundary between the fourth plate part 112 and the second plate part 132 can be improved, and meanwhile the stress concentration at the position of the connecting plate 13 can be mitigated and the risk of cracking of the connecting plate 13 can be reduced.

It should be noted that the outer surface of the second transition part 1322 may be of a plurality of forms. For example, the outer surface of the second transition part 1322 may include a planar structure and is flush with the outer surface of the fourth plate part 112. Alternatively, the outer surface of the second transition part 1322 may include an arc-shaped structure to achieve a rounded transition to the outer surface of the plate main body 1321.

In addition, when the inner surface of the second transition part 1322 includes an arc-shaped structure, the radius corresponding to the arc-shaped structure is of multiple sizes. Optionally, the radius of the arc-shaped structure is not less than 0.05 mm and not greater than half of the thickness difference between the plate main body 1321 and the first plate part 131. In this way, the arc-shaped structure may have a certain radius size to reduce the stress concentration and also mitigate the problem that the size of the plate main body 1321 is too small because the radius of the arc-shaped structure is too large. Optionally, the radius of the arc-shaped structure is 0.05 mm, 0.06 mm, 0.08 mm, 0.1 mm, or the like.

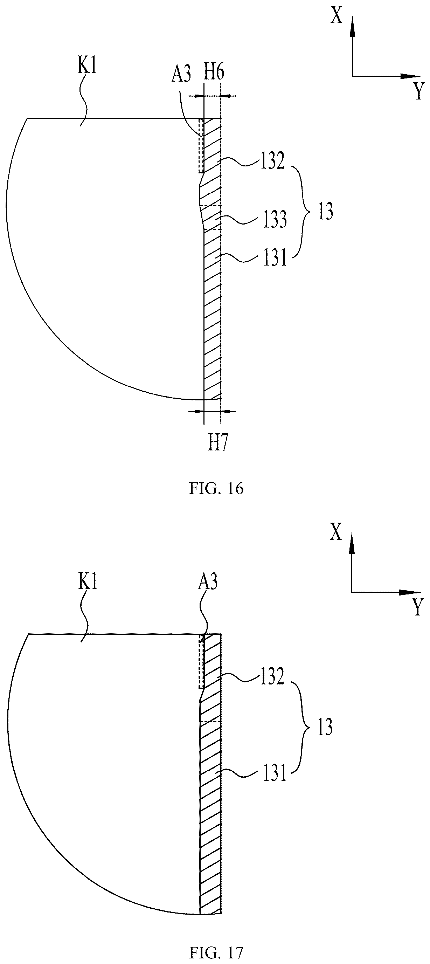

In some embodiments, as shown in FIG. 16, the maximum thickness H3 of the second plate part 132 is greater than the maximum thickness H7 of the first plate part 131. The connecting plate 13 further includes a fifth transition part 133, and the fifth transition part 133 is located between the first plate part 131 and the second plate part 132. In the first direction X and a direction from the first plate part 131 toward the second plate part 132, the thickness of the fifth transition part 133 gradually increases.

The fifth transition part 133 is located between the first plate part 131 and the second plate part 132 in the first direction X, and the fifth transition part 133 is configured to achieve a transition from the first plate part 131 to the second plate part 132. In the first direction X, the fifth transition part 133 may be disposed adjacent to the first plate part 131, or the fifth transition part 133 may be spaced apart from the first plate part 131. Similarly, in the first direction X, the fifth transition part 133 may be disposed adjacent to the second plate part 132, or the fifth transition part 133 may be spaced apart from the second plate part 132.

In the embodiments of the present application, the fifth transition part 133 is located between the first plate part 131 and the second plate part 132. Because the maximum thickness of the second plate part 132 is greater than or equal to the maximum thickness of the first plate part 131, in the embodiments of the present application, by allowing the thickness of the fifth transition part 133 to gradually increase in a direction from the first plate part 131 toward the second plate part 132 to achieve a smooth transition between the first plate part 131 and the second plate part 132 by means of the fifth transition part 133, the difficulty in molding the shell body 10 is reduced, the stress concentration is reduced, and thereby the risk of cracking of the first side plate 11 is reduced.

In some embodiments, referring to FIG. 5, FIG. 14, and FIG. 15, the second side plate 12 includes a fifth plate part 121 and a sixth plate part 122. In the first direction X, the sixth plate part 122 is located on a side of the fifth plate part 121 proximal to the shell body opening K1, the sixth plate part 122 is provided with a first recess A2 formed by being recessed inward from the shell body opening K1, and the first recess A2 is configured to bear the end cover 50.

The sixth plate part 122 is provided with a first recess A2 configured to bear the end cover 50. Due to the presence of the first recess A2, the thickness of the sixth plate part 122 at the position corresponding to the first recess A2 is relatively reduced, so that the thickness of the sixth plate part 122 at different positions is not the same. Optionally, the sixth plate part 122 has two parts of structures in the first direction, where one part is relatively proximal to the fifth plate part 121, and the other part is relatively distal to the fifth plate part 121. On this basis, in the sixth plate part 122, the thickness corresponding to the part that is relatively proximal to the fifth plate part 121 is greater than the thickness corresponding to the part that is relatively distal to the fifth plate part 121 to form the first recess A2.

In the embodiments of the present application, by providing the first recess A2 at the sixth plate part 122, the end cover 50 can be partially located in the first recess A2. Therefore, the relative position of the end cover 50 can be determined by means of the first recess A2, thereby improving the reliability of the relative position between the end cover 50 and the shell body 10.

It should be noted that the thickness dimension H8 of the sixth plate part 122 corresponding to the first recess A2 may be greater than the maximum thickness of the fifth plate part 121, or the thickness dimension of the sixth plate part 122 corresponding to the first recess A2 may also be less than or equal to the maximum thickness of the fifth plate part 121.

In some embodiments, the thickness dimension H8 of the sixth plate part 122 at the first recess A2 is not less than the maximum thickness of the fifth plate part 121, which can further improve the structural strength of the sixth plate part 122, thereby reducing the risk of cracking at the sixth plate part 122 and improving the use reliability of the battery cell 600.

In some embodiments, the first side plate 11 includes a third plate part 111 and a fourth plate part 112. In the first direction X, the fourth plate part 112 is located on a side of the third plate part 111 proximal to the shell body opening K1. In the first direction X, the dimension of the sixth plate part 122 is greater than or equal to the dimension of the fourth plate part 112.

As can be seen from the above content, the sixth plate part 122 is provided with a first recess A2, and the second recess A3 is mainly configured for the disposing of the end cover 50 to improve the connection reliability between the end cover 50 and the shell body 10. Optionally, the dimension of the first recess A2 in the first direction X may be greater than or equal to the thickness dimension of the end cover 50, so that the end cover 50 can fully extend into the first recess A2.

Optionally, since the sixth plate part 122 is provided with the first recess A2, to improve the molding precision of the second side plate 12, the dimension of the sixth plate part 122 is adjusted in the embodiments of the present application, so that the dimension of the sixth plate part 122 in the first direction X is greater than or equal to the dimension of the fourth plate part 112 in the first direction X, thereby ensuring that the sixth plate part 122 can have a certain dimension in the first direction X, thus meeting the requirements of the first recess A2, improving the connection strength between the shell body 10 and the end cover 50 by means of the first recess A2, and improving the reliability of the subsequently formed battery cell 600. Further optionally, in the first direction X, the dimension difference between the sixth plate part 122 and the fourth plate part 112 is less than the dimension of the first recess A2, so as to help improve the production efficiency and the production yield.

In addition, by setting the dimension of the sixth plate part 122 in the first direction X to be greater than or equal to the dimension of the fourth plate part 112 in the first direction X, the difference in the structural strength between the sixth plate part 122 and the fourth plate part 112 caused by the presence of the first recess A2 can be reduced, thereby further reducing the risk of cracking of the sixth plate part 122 and improving the overall reliability.

In some embodiments, referring to FIG. 16 and FIG. 17, the second plate part 132 is provided with a second recess A3 formed by being recessed inward from the shell body opening K1, and the first recess A2 is arranged to be in communication with the second recess A3.

In the embodiments of the present application, the second recess A3 is further provided in addition to the first recess A2. Both the first recess A2 and the second recess A3 are configured to bear the end cover 50, so that the reliability of the relative position of the end cover 50 relative to the second side plate 12 and the connecting plate 13 can be improved, thereby helping improve the connection reliability between the end cover 50 and the shell body 10. Further, in the embodiments of the present application, the first recess A2 is further arranged to be in communication with the second recess A3. This helps reduce the risk of sudden thickness change of the shell body 10 at the boundary between the first recess A2 and the second recess A3, reduce the difficulty in fabricating the shell body 10, and improve the structural reliability of the shell body 10.

It should be noted that FIG. 16 and FIG. 17 show structures of two types of connecting plates 13. In

FIG. 16, the second plate part 132 includes partial structures with different thicknesses, and the minimum thickness of the second plate part 132 is the same as the maximum thickness of the first plate part 131. In FIG. 17, the second plate part 132 also includes partial structures with different thicknesses, but the maximum thickness of the second plate part 132 is the same as the maximum thickness of the first plate part 131. The division between the second plate part 132 and the first plate part 131 may be the dashed line position between the second plate part 132 and the first plate part 131 in FIG. 17.

In some embodiments, as shown in FIG. 16, the thickness H6 of the second plate part 132 at the second recess A3 is not less than the maximum thickness H7 of the first plate part 131. In this way, the structural strength of the second plate part 132 can be further improved, thereby reducing the risk of cracking at the second plate part 132 and improving the use reliability of the battery cell 600.

In other embodiments not illustrated, the thickness of the second plate part 132 at the second recess A3 is less than the maximum thickness H7 of the first plate part 131.

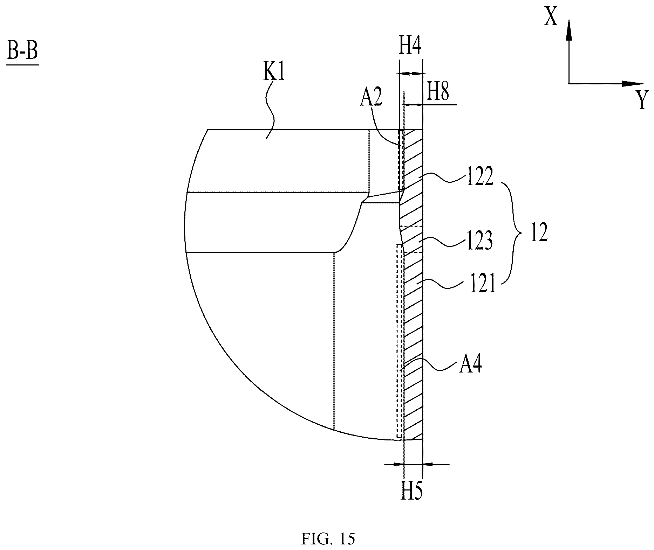

In some embodiments, referring to FIG. 14 and FIG. 15, the second side plate 12 includes a fifth plate part 121 and a sixth plate part 122. In the first direction X, the sixth plate part 122 is located on a side of the fifth plate part 121 proximal to the shell body opening K1. The maximum thickness H4 of the sixth plate part 122 is greater than the maximum thickness H5 of the fifth plate part 121.

The second side plate 12 includes a fifth plate part 121 and a sixth plate part 122. The fifth plate part 121 and the sixth plate part 122 are arranged side by side in the first direction X. Optionally, the fifth plate part 121 is disposed corresponding to the first plate part 131, and the sixth plate part 122 is disposed corresponding to the second plate part 132. In the first direction X, the sixth plate part 122 is located on a side of the fifth plate part 121 proximal to the shell body opening K1. Further, the fifth plate part 121 may be disposed adjacent to the sixth plate part 122, or the fifth plate part 121 may also be spaced apart from the sixth plate part 122.

Optionally, the second side plate 12 further includes a fourth transition part 123. The fourth transition part 123 is located between the fifth plate part 121 and the sixth plate part 122, and in the first direction X and a direction from the fifth plate part 121 toward the sixth plate part 122, the thickness of the fourth transition part 123 gradually increases. The fourth transition part 123 can reduce the difficulty in molding the shell body 10.

Similar to the second plate part 132 of the connecting plate 13, the sixth plate part 122 of the second side plate 12 is also welded and fixed to the end cover 50. On this basis, in the embodiments of the present application, the maximum thickness H4 of the sixth plate part 122 is set to be greater than the maximum thickness H5 of the fifth plate part 121, so that the sixth plate part 122 can have greater structural strength than the fifth plate part 121, thereby reducing the risk of cracking or breakage near the position where the sixth plate part 122 is welded to the end cover 50 caused by the expansion stress of the electrode assembly 20, thus improving the use reliability of the battery cell 600.

It should be noted that, depending on actual needs, the thicknesses of the fifth plate part 121 at different positions may be kept equal, or the thicknesses of the fifth plate part 121 at different positions may also be kept different. Similarly, the thicknesses of the sixth plate part 122 at different positions may be kept equal, or the thicknesses of the sixth plate part 122 at different positions may also be kept different. On this basis, in the embodiments of the present application, what only needs to be met is that the maximum thickness H4 of the sixth plate part 122 is greater than the maximum thickness H5 of the fifth plate part 121.

In some embodiments, the outer surface of the fifth plate part 121 is flush with the outer surface of the sixth plate part 122.

The outer surface of the fifth plate part 121 is the surface of the fifth plate part 121 facing away from the electrode assembly 20, the outer surface of the sixth plate part 122 is the surface of the sixth plate part 122 facing away from the electrode assembly 20, and the maximum thickness of the sixth plate part 122 is greater than the maximum thickness of the fifth plate part 121. On this basis, in the embodiments of the present application, the outer surface of the fifth plate part 121 is arranged to be flush with the outer surface of the sixth plate part 122, so that the inner surface of the sixth plate part 122 is arranged to be at least partially protruding from the inner surface of the fifth plate part 121.

Further optionally, the minimum thickness of the sixth plate part 122 is greater than or equal to the maximum thickness of the fifth plate part 121. In other words, the thickness of the sixth plate part 122 at a position that corresponds to the first recess A2 is still greater than or equal to the maximum thickness H5 of the fifth plate part 121. This helps improve the welding reliability between the sixth plate part 122 and the end cover 50.

In the embodiments of the present application, by arranging the outer surface of the fifth plate part 121 to be flush with the outer surface of the sixth plate part 122, the flatness of the outer surface of the second side plate 12 can be improved, and thus the visual appearance of the shell body 10 can be improved. In addition, if a plurality of battery cells 600 are attached to each other in the battery, this design can reduce the risk of collision between different battery cells 600 and improve the use reliability of the battery cells 600.

In some embodiments, two first side plates 11 are disposed opposite to each other in the third direction Z, two second side plates 12 are disposed opposite to each other in the second direction Y, and any two of the first direction X, the second direction Y, and the third direction Z intersect with each other. The dimension of the first side plate 11 in the second direction Y is greater than the dimension of the second side plate 12 in the third direction Z.

The two first side plates 11 and the two second side plates 12 are alternately disposed along a circumferential direction of the shell body opening K1. Optionally, every two of the first direction X, the second direction Y, and the third direction Z are perpendicular to each other, so that the first side plate 11 is relatively perpendicular to the second side plate 12. Further optionally, the number of the connecting plates 13 may be four, and each connecting plate 13 is configured to connect the first side plate 11 and the second side plate 12 that are adjacent to each other.

In addition, the dimension of the first side plate 11 in the second direction Y is greater than the dimension of the second side plate 12 in the third direction Z. That is, the size of the outer surface of the first side plate 11 may be greater than the size of the outer surface of the second side plate 12. This design can allow the third plate part 111 of the first side plate 11 to have a larger size, so that the clearance space A1 formed by the recessing of the third plate part 111 can have a larger accommodation size, thereby further meeting the expansion requirements of the electrode assembly 20 and improving the corresponding energy density of the battery cell 600. Meanwhile, the first recess A2 disposed on the second side plate 12 may be configured to meet the assembly requirements of the end cover 50 and improve the reliability of the relative position between the shell body 10 and the end cover 50.

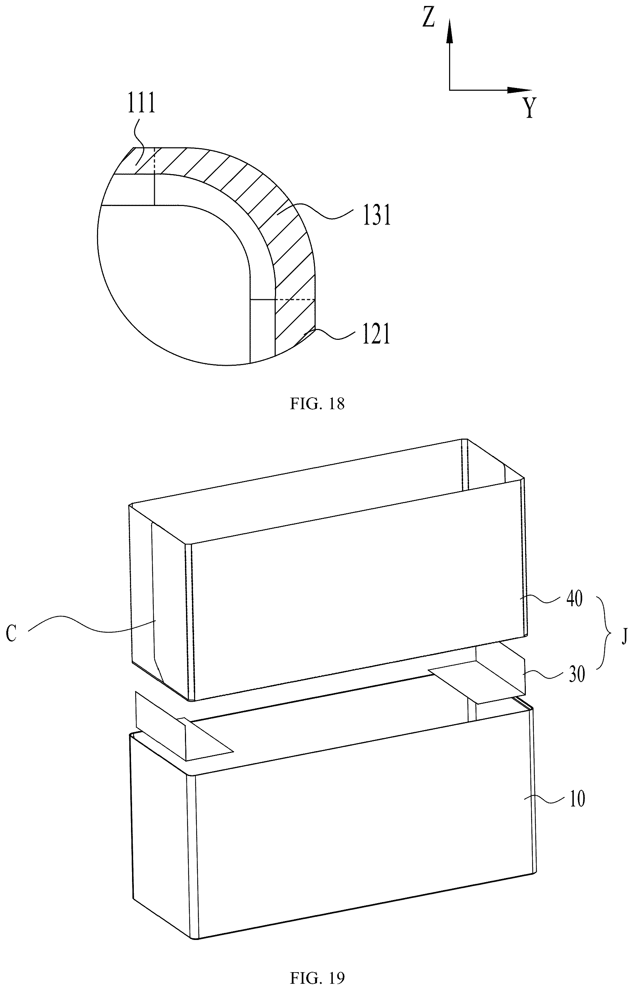

In some embodiments, referring to FIG. 5 and FIG. 18, the first side plate 11 includes a third plate part 111 disposed corresponding to the first plate part 131 in the circumferential direction of the shell body 10, and the second side plate 12 includes a fifth plate part 121 disposed corresponding to the first plate part 131 in the circumferential direction of the shell body 10. The first plate part 131 is directly connected to the third plate part 111 and the fifth plate part 121, and the inner surfaces of the first plate part 131, the third plate part 111, and the fifth plate part 121 exhibit rounded transition.

In the embodiments of the present application, the first plate part 131 is directly connected to the third plate part 111, that is, there is no other transition structure therebetween. In this way, the transition smoothness at the boundary between the inner surface of the first plate part 131 and the inner surface of the third plate part 111 is improved. This helps simplify the connection form between the first side plate 11 and the connecting plate 13 and improve the reliability of the relative position between the two. In addition, the first plate part 131 is directly connected to the fifth plate part 121, that is, there is no other transition structure therebetween. In this way, the transition smoothness at the boundary between the inner surface of the first plate part 131 and the inner surface of the fifth plate part 121 is improved. This helps simplify the connection form between the second side plate 12 and the connecting plate 13 and improve the reliability of the relative position between the two.

It should be noted that the thickness of the third plate part 111 may be different from the thickness of the fifth plate part 121. Illustratively, the thickness of the third plate part 111 is less than the thickness of the fifth plate part 121. On this basis, the thickness of the first plate part 131 may exhibit a gradually decreasing trend in the direction gradually approaching the third plate part 111, and the thickness of the first plate part 131 may exhibit a gradually increasing trend in the direction gradually approaching the fifth plate part 121.

In a second aspect, referring to FIG. 4 and FIG. 5, embodiments of the present application provide a battery cell 600. The battery cell 600 includes the shell body 10, the end cover 50, and the electrode assembly 20 according to any one of the aforementioned embodiments. The electrode assembly 20 is accommodated in the shell body 10, and the end cover 50 is welded to the second plate part 132, the first side plate 11, and the second side plate 12.

It should be noted that the battery cell 600 according to the embodiments of the present application has the beneficial effects of the shell body 10 in any one of the aforementioned embodiments. For details, reference may be made to the foregoing description of the beneficial effects of the shell body 10, which is not limited in the embodiments of the present application.

In some embodiments, referring to FIG. 4, FIG. 11, and FIG. 19, the battery cell 600 further includes an insulating assembly J. The insulating assembly J is disposed outside the electrode assembly 20 and insulates the electrode assembly 20 from the shell body 10. The first side plate 11 includes the third plate part 111 and the fourth plate part 112. In the first direction X, the fourth plate part 112 is located on a side of the third plate part 111 proximal to the shell body opening K1. The inner surface of the third plate part 111 is arranged to be concave relative to the inner surface of the fourth plate part 112 to form the clearance space A1. The insulating assembly J is at least partially located in the clearance space A1.

The electrode assembly 20 is a core component for realizing the charging and discharging functions of the battery cell 600 and may include two electrode plates of opposite polarities and a separator located between the two electrode plates. The separator is configured to insulate the two electrode plates. The electrode assembly 20 primarily operates by relying on movement of metal ions between the two electrode plates. The electrode assembly 20 may be of various forms. Optionally, the electrode assembly 20 may be of a wound structure, a stacked structure, or other structures. In addition, one or a plurality of electrode assemblies 20 may be provided.

The shell body 10 is of a hollow structure and is configured to accommodate components such as the electrode assembly 20 and the first insulating member 30. The insulating assembly J may be located between the electrode assembly 20 and the shell body 10, and the insulating assembly J30 is configured to insulate the shell body 10 from the electrode assembly 20. The insulating assembly J may be of a variety of shapes and structures. For example, the insulating assembly J may include a plate-like structure and is disposed between the electrode assembly 20 and the shell body 10. Alternately, the insulating assembly J may also include a hollow structure with an opening, and the hollow structure is disposed around the electrode assembly 20.

Further, in the embodiments of the present application, the insulating assembly J is at least partially disposed in the clearance space A1, so that there is more space inside the shell body 10 for accommodating the electrode assembly 20, and the energy density of the battery cell 600 is improved.

In some embodiments, the insulating assembly J includes a first insulating member 30 and a second insulating member 40. The second insulating member 40 defines, in an enclosing manner, a hollow structure configured to accommodate the electrode assembly 20 and having an opening. The first insulating member 30 is located on a side of the second insulating member 40 facing away from the electrode assembly 20, and the first insulating member 30 is at least partially located in the clearance space A1.

The insulating assembly J includes at least a first insulating member 30 and a second insulating member 40. The first insulating member 30 and the second insulating member 40 are both configured to insulate the electrode assembly 20 from the shell body 10, and the second insulating member 40 defines, in an enclosing manner, a hollow structure accommodating the electrode assembly 20 and having an opening. Optionally, the contour shape formed by the second insulating member 40 may be the same as the contour shape of the electrode assembly 20, and the second insulating member 40 may be attached to the electrode assembly 20. The presence of the second insulating member 40 can further improve the insulation reliability between the electrode assembly 20 and the shell body 10.

Further, in the embodiments of the present application, at least part of the first insulating member 30 is disposed in the clearance space A1, thereby reducing the occupation of other spaces inside the shell body 10 by the first insulating member 30, so that there can be more space inside the shell body 10 for accommodating the electrode assembly 20, and the energy density of the battery cell 600 is improved.

In some embodiments, the second insulating member 40 presents a surrounding form with ends connected to form an overlapping region C, and the first insulating member 30 is fixed to the overlapping region C.

As can be seen from the above content, the second insulating member 40 is of a hollow structure with an opening. In the process of forming the second insulating member 40, the insulating film is generally used and presents a surrounding form with ends connected to define, in an enclosing manner, a hollow structure. As a result, there is a region of overlapping insulating film on the second insulating member 40, that is, an overlapping region C. The overlapping region C has a larger thickness dimension than other positions of the second insulating member 40.

On this basis, in the embodiments of the present application, the first insulating member 30 is fixed to the overlapping region C, thereby reducing the risk of breakage and cracking of the second insulating member 40 due to the fixation between the first insulating member 30 and the second insulating member 40 and improving the structural reliability of the second insulating member 40. In addition, disposing the first insulating member 30 at the overlapping region C also helps reduce the risk of breaking of the second insulating member 40 at the overlapping region C, thereby further improving the reliability of the second insulating member 40.

In some embodiments, the second insulating member 40 is partially located in the clearance space A1.

In the embodiments of the present application, at least part of the structure of the first insulating member 30 and part of the second insulating member 40 are disposed in the clearance space A1, so that there is further more space inside the shell body 10 for accommodating the electrode assembly 20, and the energy density of the battery cell 600 is improved.

In some embodiments, part of the electrode assembly 20 is located in the clearance space A1.

In the embodiments of the present application, by controlling the concave dimension of the third plate part 111 relative to the fourth plate part 112, in addition to the first insulating member 30 and the second insulating member 40, part of the structure of the electrode assembly 20 can also be located in the clearance space A1. In this way, the size of the electrode assembly 20 inside the shell body 10 can be further increased without changing the overall size of the battery cell 600, thereby improving the energy density of the battery cell 600 and increasing the capacity of the battery cell 600.

In some embodiments, as shown in FIG. 11, the first side plate 11 further includes a first transition part 113. The first transition part 113 is located between the third plate part 111 and the fourth plate part 112, and the fourth plate part 112 is located on a side of the third plate part 111 proximal to the shell body opening K1. In the first direction X and in a direction from the third plate part 111 toward the fourth plate part 112, the thickness of the first transition part 113 gradually increases. The electrode assembly 20 includes a main body part 21 and a tab 22 connected to the main body part 21. The main body part 21 is located on a side of the first transition part 113 facing away from the shell body opening K1.

The first transition part 113 is located between the third plate part 111 and the fourth plate part 112 and is configured to connect the third plate part 111 and the fourth plate part 112. Optionally, in a direction from the third plate part 111 toward the fourth plate part 112, the thickness of the first transition part 113 may exhibit a gradually increasing trend.

The electrode assembly 20 includes a main body part 21 and a tab 22. The main body part 21 is an electricity generation part of the electrode assembly 20, and an active substance is provided on the main body part 21. The tab 22 is led out from an end part of the main body part 21 and configured to lead out electric energy generated by the main body part 21.

Optionally, the main body part 21 may include a positive electrode current collecting part, a positive electrode active substance layer, a negative electrode current collecting part, a negative electrode active substance layer, and a separator. The tab 22 may include a positive electrode tab 22 and a negative electrode tab 22.

Further, in the embodiments of the present application, by disposing the main body part 21 on the side of the first transition part 113 facing away from the shell body opening K1, part of the structure of the main body part 21 can be more easily accommodated in the clearance space A1, thereby improving the energy density of the battery cell 600, reducing the risk of the sharp angle formed by the first transition part 113 puncturing the main body part 21, and improving the use reliability of the main body part 21.

In some embodiments, in the first direction X, the projection of the main body part 21 overlaps with the projection of the fourth plate part 112. In the thickness direction of the first side plate 11, the projection of the first transition part 113 does not overlap with the projection of the main body part 21.

In the embodiments of the present application, by allowing the projection of the main body part 21 to overlap with the projection of the fourth plate part 112 in the first direction X, the main body part 21 is partially located in the clearance space A1, thereby improving the energy density of the battery cell 600. Meanwhile, by allowing the projection of the first transition part 113 to not overlap with the projection of the main body part 21 in the thickness direction of the first side plate 11, the risk of the sharp angle formed by the first transition part 113 puncturing the main body part 21 is reduced, and the use reliability of the main body part 21 is improved.

In some embodiments, in the thickness direction of the second side plate 12, the projection of the fourth transition part 123 does not overlap with the projection of the main body part 21, thereby reducing the impact of the fourth transition part 123 on the main body part 21.

Optionally, in the first direction X, the projection of the main body part 21 overlaps with the projection of the sixth plate part 122, that is, the main body part 21 is accommodated in the recess space A4 formed by the fifth plate part 121 and the sixth plate part 122, thereby improving the energy density of the battery cell 600.

It should be noted that, with reference to FIG. 21, for the surface of the main body part 21 facing the surface of the shell body opening K1 and in the first direction X, a spacing dimension T relative to the boundary of the first transition part 113 and the boundary of the third plate part 111 may be of a plurality of forms, where T needs to satisfy that T ≥ 0 mm. Optionally, T may be equal to 0 mm, that is, the surface of the main body part 21 facing the shell body opening K1, the boundary of the first transition part 113, and the boundary of the third plate part 111 are located at the same height in the first direction X. Alternatively, as shown in the figure, T may be greater than 0 mm. Illustratively, T may be 1 mm, 5 mm, 8 mm, 10 mm, or the like.

In some embodiments, as shown in FIG. 10 and FIG. 11, the shell body 10 includes two first side plates 11 disposed opposite to each other in the third direction Z. The spacing between fourth plate parts 112 of the two first side plates 11 in the third direction Z is D1, the dimension of the electrode assembly 20 in the third direction Z is D2, and in the same first side plate 11, the spacing between the inner surface of the third plate part 111 and the inner surface of the fourth plate part 112 in the third direction Z is D3. D1, D2, and D3 satisfy that 2 mm - 2*D3 ≤ D1 - D2≤ 22 mm. That is, 2 mm - 2*D3 + D2 ≤ D1 ≤ 22 mm + D2.

It should be noted that the dimension D2 of the electrode assembly 20 according to the embodiments of the present application in the third direction Z refers to the dimension of the electrode assembly 20 when entering the shell body 10. When the electrode assembly 20 operates, the dimension of the electrode assembly 20 may change to some extent, that is, the electrode assembly 20 may generate a certain degree of expansion, resulting in an increase in the dimension of part of it.

As can be seen from the above content, during the process of the electrode assembly 20 entering the shell, the electrode assembly 20 will first enter the shell body 10 from the external environment to a position corresponding to the fourth plate part 112. In this process, the two fourth plate parts 112 in the two opposite first side plates 11 may limit the shell entering process of the electrode assembly 20. Therefore, to meet the shell entering requirements of the electrode assembly 20 and the energy density requirements of the battery cell 600, the spacing D1 between the two fourth plate parts 112 in the third direction Z is controlled in the embodiments of the present application.

Specifically, the dimension of the electrode assembly 20 in the third direction Z is D2, and in the same first side plate 11, the spacing between the inner surface of the third plate part 111 and the inner surface of the fourth plate part 112 in the third direction Z is D3. When the outer surface of the third plate part 111 is flush with the outer surface of the fourth plate part 112, D3 may be the difference between the thickness of the third plate part 111 and the thickness of the fourth plate part 112.

Further, if D1 is less than 2 mm - 2*D3, during the process of the electrode assembly 20 entering the shell, the distance between the electrode assembly 20 and the fourth plate part 112 is too short, thereby causing difficulty in shell entering of the electrode assembly 20. In addition, during the use of the battery cell 600, the tear force on the fourth plate part 112 generated by the expansion of the electrode assembly 20 is increased, the electrode assembly 20 is greatly squeezed, and the battery cell 600 is prone to the risk of failure and explosion.

If D1 is greater than 22 mm + D2, the spacing between the electrode assembly 20 and the first side plate 11 in the formed battery cell 600 is too large, resulting in excess space that is not utilized in the battery cell 600, which is not conducive to the energy density of the battery cell 600.

In view of this, in the embodiments of the present application, D1, D2, and D3 are set to be: 2 mm - 2*D3 ≤ D1 - D2 ≤ 22 mm, so that the energy density of the battery cell 600 can be improved while meeting the shell entering requirements of the electrode assembly 20, exhibiting strong practicability.

In some embodiments, 2 mm - 2*D3 ≤ D1 - D2 ≤ 10 mm. Optionally, the value of D1 - D2 is one of 2 mm - 2*D3, 2 mm, 3 mm, 5 mm, 7 mm, and 10 mm.

In the embodiments of the present application, the gap dimension D1 - D2 between the electrode assembly 20 and the third plate part 111 is further defined, so that the spacing between the electrode assembly 20 and the first side plate 11 can be further reduced, the energy density of the battery cell 600 can be further improved, and the practicability can be improved. Further optionally, 2 mm - 2*D3 ≤ D1 - D2 ≤ 6 mm. Illustratively, the value of D1 - D2 is one of 2 mm - 2*D3, 2 mm, 3 mm, 5 mm, and 6 mm.

In some embodiments, the shell body 10 includes two first side plates 11 disposed opposite to each other in the second direction Y. The dimension of the electrode assembly 20 in the third direction Z is D2, the dimension of the shell body 10 in the third direction Z is D4, the dimension of the fourth plate part 112 in the third direction Z is H2, and in the same first side plate 11, the spacing between the inner surface of the third plate part 111 and the inner surface of the fourth plate part 112 in the second direction Y is D3. D2, D3, D4, and H2 satisfy that D4 - 2*H2 - 22 mm ≤ D2 ≤ D4 - 2*H2 - (1.5 - 2*D3) - 0.2 mm.

In the formula, the value of D4 - 2*H2 is the spacing dimension between the two opposite fourth plate parts 112. Experiments show that if D2 is less than D4 - 2*H2 - 22 mm, the electrode assembly 20 will be at a relatively large distance from the first side plate 11 in the battery cell 600, which is not conducive to the energy density of the battery cell 600. If D2 is greater than D4 - 2*H2 - (1.5 - 2*D3) - 0.2 mm, the distance between the electrode assembly 20 and the first side plate 11 is too short, which is not conducive to the process of the electrode assembly 20 entering the shell, and at the same time, during the use of the battery cell 600, the slight expansion of the electrode assembly 20 will result in contact with the first side plate 11 and thereby drives the first side plate 11 to deform, which easily leads to failure of the battery cell 600.

In view of this, in the embodiments of the present application, D2 is set to be not less than D4 - 2*H2 - 22 mm to ensure that the battery cell 600 has a certain energy density and meets the capacity requirements of the battery cell 600. Meanwhile, D2 is also set to be not greater than D4 - 2*H2 - (1.5 - 2*D3) - 0.2 mm to ensure that the electrode assembly 20 can be spaced apart from the first side plate 11 by a certain distance during the use of the battery cell 600, thus meeting the expansion requirements of the electrode assembly 20 and improving the use reliability of the battery cell 600.

In some embodiments, as shown in FIG. 11, the battery cell 600 further includes a second insulating member 40. The second insulating member 40 defines, in an enclosing manner, a hollow structure configured to accommodate the electrode assembly 20 and having an opening. The electrode assembly 20 includes a main body part 21 and a tab 22 connected to the main body part 21. The second insulating member 40 extends beyond the main body part 21 by a dimension L1 in the first direction X, and L1 satisfies that 1 mm ≤ L1 ≤ 10 mm. Optionally, the value of L1 is one of 1 mm, 2 mm, 4 mm, 5 mm, 7 mm, and 10 mm.

The second insulating member 40 is configured to block the electric conduction and friction between the electrode assembly 20 and the shell body 10. Further, in the embodiments of the present application, the second insulating member 40 is arranged to extend beyond the main body part 21 in the first direction X to improve the insulating effect of the second insulating member 40 on the electrode assembly 20. On this basis, in the embodiments of the present application, the second insulating member 40 is arranged to extend beyond the main body part 21 by a dimension L1 of not less than 1 mm in the first direction X to ensure the insulating protection effect of the second insulating member 40 on the main body part 21. Meanwhile, the second insulating member 40 is arranged to extend beyond the main body part 21 by a dimension L1 of not greater than 10 mm in the first direction X to reduce the possibility of the second insulating member 40 occupying too much space inside the battery cell 600 due to its overlarge size, thereby improving the energy density of the battery cell 600.

In some embodiments, the spacing between the side of the second insulating member 40 facing the shell body opening K1 and the shell body opening K1 in the first direction X is L2, and L2 satisfies that 1 mm ≤ L2 ≤ 10 mm. Optionally, the value of L2 is one of 1 mm, 2 mm, 4 mm, 5 mm, 7 mm, and 10 mm.

During the process of fabricating the battery cell 600, the second insulating member 40 usually needs to be welded and fixed to an insulating structure such as a lower plastic part. On this basis, if the second insulating member 40 is too far away from the shell body opening K1, it is likely to cause poor welding and the like. If the second insulating member 40 is too close to the shell body opening K1, the second insulating member 40 occupies too much internal space of the shell body 10, which is not conducive to the energy density of the battery cell 600.

In view of this, in the embodiments of the present application, L2 is set to be not less than 1 mm to help improve the welding strength between the second insulating member 40 and the insulating structure such as the lower plastic part, thereby improving the reliability. Meanwhile, L2 is also set to be not greater than 10 mm to reduce the occupation of the internal space of the shell body 10 by the second insulating member 40, which helps improve the energy density of the battery cell 600.

In some embodiments, as shown in FIG. 10, the shell body 10 further includes a bottom plate 14 disposed opposite to the shell body opening K1. The maximum thickness of the bottom plate 14 is W3, and W3 satisfies that 0.7 mm ≤ W3 ≤ 5mm. Optionally, the value of W3 is one of 0.7 mm, 1 mm, 2 mm, 3 mm, 4 mm, and 5 mm.

The bottom plate 14 is disposed opposite to the shell body opening K1. Optionally, the first side plate 11 and the second side plate 12 are disposed around the peripheral side of the bottom plate 14. In the related art, the maximum thickness of the bottom plate 14 is typically greater than 7 mm or even greater than 10 mm. However, in the embodiments of the present application, to provide more space in the shell body 10 for arranging the electrode assembly 20, the maximum thickness of the bottom plate 14 is reduced in the embodiments of the present application, so that W3 is not greater than 5 mm, thereby providing more space for the electrode assembly 20 and improving the energy density of the battery cell 600. Further, in the embodiments of the present application, W3 is further set to be not less than 0.7 mm to ensure that the bottom plate 14 can have a certain structural strength, thereby reducing the risk of cracking of the bottom plate 14 and improving the reliability.

In some embodiments, the thickness of the second plate part 132 is less than the thickness of the bottom plate 14.

In the embodiments of the present application, to ensure the fabrication reliability of the shell body 10 and the stress resistance capability of the shell body 10, the maximum thickness of the bottom plate 14 is set to be greater than the maximum thickness of the second plate part 132 in the embodiments of the present application, so that the bottom plate 14 can have a certain structural strength, thereby reducing the risk of cracking of the bottom plate 14 and improving the reliability. Further optionally, the maximum thickness of the bottom plate 14 is greater than the maximum thickness of the fourth plate part 112; and/or the maximum thickness of the bottom plate 14 is greater than the maximum thickness of the sixth plate part 122.

In some embodiments, the first side plate 11 includes a third plate part 111 and a fourth plate part 112. In the first direction X, the fourth plate part 112 is located on a side of the third plate part 111 proximal to the shell body opening K1. The second side plate 12 includes a fifth plate part 121 and a sixth plate part 122. In the first direction X, the sixth plate part 122 is located on a side of the fifth plate part 121 proximal to the shell body opening K1, and the sixth plate part 122 is provided with a first recess A2 formed by being recessed inward from the shell body opening K1. The end cover 50 is partially located in the first recess A2 and connected to the sixth plate part 122 and the fourth plate part 112.

In the embodiments of the present application, the end cover 50 may be partially located in the first recess A2, so that the relative position of the end cover 50 is determined by means of the first recess A2. On this basis, the end cover 50 may further be connected and fixed to the sixth plate part 122 and the fourth plate part 112 through welding, thus improving the reliability of the relative position between the end cover 50 and the shell body 10.

In a second aspect, embodiments of the present application provide a battery. The battery includes the battery cell 600 according to any one of the aforementioned embodiments.

It should be noted that the battery according to the embodiments of the present application has the beneficial effects of the battery cell 600 in any one of the aforementioned embodiments. For the specific content, reference may be made to the foregoing description of the beneficial effects of the battery cell 600. Details are not described herein again in the embodiments of the present application.

In some embodiments, referring to FIG. 7 and FIG. 20, the battery includes a battery cell group and an end plate 60. The battery cell group includes a plurality of battery cells 600 stacked in the third direction Z. The first side plate 11 includes a third plate part 111 and a fourth plate part 112, and in the first direction X, the fourth plate part 112 is located on a side of the third plate part 111 proximal to the shell body opening K1. The maximum thickness of the fourth plate part 112 is greater than the maximum thickness of the third plate part 111, and the third direction Z is parallel to the thickness direction of the first side plate 11 and intersects with the first direction X. In the third direction Z, the end plate 60 is disposed at the end part of the battery cell group, where in the direction from the third plate part 111 toward the fourth plate part 112, the fourth plate part 112 is arranged to at least partially extend beyond the end plate 60.

The battery cell group includes a plurality of battery cells 600. The plurality of battery cells 600 are arranged side by side in the third direction Z. The end plate 60 is disposed on at least one side of the plurality of battery cells 600 in the third direction Z, where the number of the end plate 60 may be one or two. If the number of the end plates 60 is two, the two end plates 60 may be respectively located on two sides of the battery cell group in the third direction Z.

The first side plate 11 includes a third plate part 111 and a fourth plate part 112. The thickness of the fourth plate part 112 is greater than the thickness of the third plate part 111. Therefore, the strength of the fourth plate part 112 is usually greater than the strength of the third plate part 111.

In the embodiments of the present application, in the direction from the third plate part 111 toward the fourth plate part 112, the fourth plate part 112 is arranged to extend beyond the end plate 60, where in the direction from the third plate part 111 toward the fourth plate part 112, the fourth plate part 112 may be arranged to entirely extend beyond the end plate 60, or the fourth plate part 112 may be arranged to only partially extend beyond the end plate 60. At least part of the structure of the fourth plate part 112 extending beyond the end plate 60 is not constrained by the end plate 60. On this basis, by setting the thickness of the fourth plate part 112 to be greater than the thickness of the third plate part 111, the strength corresponding to the part of the structure that is not constrained by the end plate 60 can be improved, thereby mitigating the risk of cracking caused by constraints from the end plate 60 and improving the use reliability of the battery.

In a third aspect, referring to FIG. 5 to FIG.13, FIG. 15, and FIG. 16, embodiments of the present application provide an electric device. The electric device includes the battery cell 600 in any one of the aforementioned embodiments. The battery cell 600 is configured to provide electric energy.

According to some embodiments of the present application, the battery cell 600 includes a shell body 10, an electrode assembly 20, a first insulating member 30, and a second insulating member 40. The electrode assembly 20, the first insulating member 30, and the second insulating member 40 are all accommodated in the shell body 10. An end part of the shell body 10 in the first direction X is provided with a shell body opening K1. The shell body 10 includes a first side plate 11, a second side plate 12, and a connecting plate 13. The first side plate 11 and the second side plate 12 are arranged along a circumferential direction of the shell body opening K1, the connecting plate 13 is connected to the first side plate 11 and the second side plate 12, and at least part of the outer surface of the connecting plate 13 includes an arc-shaped surface.

The first side plate 11 includes a third plate part 111, a fourth plate part 112, and a first transition part 113 located between the third plate part 111 and the fourth plate part 112. The fourth plate part 112 is located on a side of the third plate part 111 proximal to the shell body opening K1. The outer surfaces of the third plate part 111 and the fourth plate part 112 are flush with each other. The inner surface of the third plate part 111 is arranged to be concave relative to the inner surface of the fourth plate part 112 to form a clearance space A1 in the first side plate 11. The first insulating member 30, the second insulating member 40, and the electrode assembly 20 are all at least partially located in the clearance space A1.

In a direction from the third plate part 111 toward the fourth plate part 112, the thickness of the first transition part 113 gradually increases. The first transition part 113 includes a first transition surface M1 facing the interior of the shell body 10, the included angle between the first transition surface M1 and the first direction X is α, and α satisfies that 0 < α ≤ 60°.

The connecting plate 13 includes a first plate part 131 and a second plate part 132. The second plate part 132 is located on a side of the first plate part 131 proximal to the shell body opening K1. The thickness of the second plate part 132 is greater than the thickness of the first plate part 131, and the thickness of the second plate part 132 is less than the thickness of the fourth plate part 112. The included angle between the inner surface of the second plate part 132 and the inner surface of the fourth plate part 112 is β, and β satisfies that 155° ≤ β ≤ 270°. The second plate part 132 includes a plate main body 1321 and a second transition part 1322 connecting the main body 13 of the plate and the fourth plate part 112. In a direction from the fourth plate part 112 toward the plate main body 1321, the thickness of the second transition part 1322 exhibits a gradually decreasing trend.

The second side plate 12 includes a fifth plate part 121 and a sixth plate part 122. The sixth plate part 122 is located on a side of the fifth plate part 121 proximal to the shell body opening K1, and the thickness of the sixth plate part 122 is not less than the thickness of the fifth plate part 121. The second plate part 132 includes a third transition part 1323 connecting the plate main body 1321 and the sixth plate part 122. In a direction from the sixth plate part 122 toward the plate main body 1321, the thickness of the third transition part 1323 exhibits a gradually decreasing trend.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A shell body of a battery cell, wherein an end part of the shell body in a first direction is provided with a shell body opening, and the shell body comprises:
a first side plate and a second side plate arranged along a circumferential direction of the shell body opening; and
a connecting plate connected to the first side plate and the second side plate, wherein at least part of an outer surface of the connecting plate comprises an arc-shaped surface, the connecting plate comprises a first plate part and a second plate part , and in the first direction, the second plate part is located on a side of the first plate part proximal to the shell body opening, wherein
a maximum thickness of the second plate part is greater than or equal to a maximum thickness of the first plate part.

2. The shell body according to claim 1, wherein the first side plate comprises a third plate part and a fourth plate part, and in the first direction, the fourth plate part is located on a side of the third plate part proximal to the shell body opening, wherein
a maximum thickness of the fourth plate part is greater than a maximum thickness of the third plate part.

3. The shell body according to claim 2, wherein an inner surface of the third plate part is arranged to be concave relative to an inner surface of the fourth plate part; and/or
an inner surface of the first plate part is arranged to be concave relative to an inner surface of the second plate part.

4. The shell body according to claim 3, wherein an outer surface of the third plate part is flush with an outer surface of the fourth plate part; and/or
an outer surface of the first plate part is flush with an outer surface of the second plate part.

5. The shell body according to any one of claims 2 to 4, wherein the maximum thickness of the third plate part is H1, the maximum thickness of the fourth plate part is H2, and H1 and H2 satisfy that 0.05 mm ≤ H2 - H1 ≤ 0.3 mm.

6. The shell body according to any one of claims 2 to 5, wherein the first side plate further comprises a first transition part, and the first transition part is located between the third plate part and the fourth plate part;
in the first direction and a direction from the third plate part toward the fourth plate part, a thickness of the first transition part gradually increases.

7. The shell body according to claim 6, wherein the first transition part comprises a first transition surface facing an interior of the shell body, an included angle between the first transition surface and the first direction is α, and α satisfies that 0 < α ≤ 60°.

8. The shell body according to any one of claims 2 to 7, wherein the maximum thickness of the second plate part is H3, the maximum thickness of the fourth plate part is H2, and H2 and H3 satisfy that 0.1 mm ≤ H3 ≤ 0.8H2.

9. The shell body according to any one of claims 2 to 8, wherein the maximum thickness of the second plate part is not greater than the maximum thickness of the fourth plate part; and/or a difference between the maximum thicknesses corresponding to the second plate part and the first plate part is not greater than a difference between the maximum thicknesses corresponding to the fourth plate part and the third plate part.

10. The shell body according to claim 9, wherein two second side plates are disposed opposite to each other in a second direction, and the first direction intersects with the second direction;
the fourth plate part comprises a central part and an edge part located on at least one side of the central part in the second direction, the edge part is connected to the second plate part, and a maximum thickness of the edge part is less than a maximum thickness of the central part.

11. The shell body according to claim 10, wherein a dimension of the central part in the second direction is Z1, a dimension of the shell body in the second direction is Z2, and Z1 and Z2 satisfy that 0.5 ≤ Z1/Z2.

12. The shell body according to any one of claims 2 to 11, wherein an included angle between the inner surface of the fourth plate part and the inner surface of the second plate part is β, and β satisfies that 155° ≤ β ≤ 270°.

13. The shell body according to any one of claims 2 to 12, wherein the second plate part comprises a plate main body and a second transition part connecting the plate main body and the fourth plate part, and a maximum thickness of the plate main body is less than a minimum thickness of the second transition part;
in a direction gradually approaching the fourth plate part, a thickness of the second transition part exhibits a gradually increasing trend.

14. The shell body according to claim 13, wherein two second side plates are disposed opposite to each other in the second direction, and the first direction intersects with the second direction;
a dimension of the second transition part in the second direction is L1, and L1 satisfies that 1 mm ≤ L1 ≤ 15 mm.

15. The shell body according to claim 13 or 14, wherein an inner surface of the second transition part comprises an arc-shaped structure; and/or
the inner surface of the second transition part comprises a planar structure.

16. The shell body according to any one of claims 1 to 15, wherein the maximum thickness of the second plate part is greater than the maximum thickness of the first plate part, the connecting plate further comprises a fifth transition part, and the fifth transition part is located between the first plate part and the second plate part;
in the first direction and a direction from the first plate part toward the second plate part, a thickness of the fifth transition part gradually increases.

17. The shell body according to any one of claims 1 to 16, wherein the second side plate comprises a fifth plate part and a sixth plate part, and in the first direction, the sixth plate part is located on a side of the fifth plate part proximal to the shell body opening;
the sixth plate part is provided with a first recess formed by being recessed inward from the shell body opening, and the first recess is configured to bear an end cover of the battery cell.

18. The shell body according to claim 17, wherein a thickness of the sixth plate part at a position of the first recess is not less than a maximum thickness of the fifth plate part.

19. The shell body according to claim 17 or 18, wherein the first side plate comprises the third plate part and the fourth plate part, and in the first direction, the fourth plate part is located on the side of the third plate part proximal to the shell body opening;
in the first direction, a dimension of the sixth plate part is greater than or equal to a dimension of the fourth plate part.

20. The shell body according to any one of claims 17 to 19, wherein the second plate part is provided with a second recess formed by being recessed inward from the shell body opening, and the first recess is arranged to be in communication with the second recess.

21. The shell body according to claim 20, wherein a thickness of the second plate part at a position of the second recess is not less than the maximum thickness of the first plate part.

22. The shell body according to any one of claims 1 to 21, wherein the second side plate comprises the fifth plate part and the sixth plate part, and in the first direction, the sixth plate part is located on the side of the fifth plate part proximal to the shell body opening;
a maximum thickness of the sixth plate part is greater than the maximum thickness of the fifth plate part.

23. The shell body according to claim 22, wherein the second side plate further comprises a fourth transition part, and the fourth transition part is located between the fifth plate part and the sixth plate part;
in the first direction and a direction from the fifth plate part toward the sixth plate part, a thickness of the fourth transition part gradually increases; and/or
an outer surface of the fifth plate part is flush with an outer surface of the sixth plate part.

24. The shell body according to any one of claims 17 to 23, wherein two first side plates are disposed opposite to each other in a third direction, two second side plates are disposed opposite to each other in the second direction, and any two of the first direction, the second direction, and the third direction intersect with each other;
a dimension of the first side plate in the second direction is greater than a dimension of the second side plate in the third direction.

25. The shell body according to any one of claims 1 to 24, wherein the first side plate comprises the third plate part disposed corresponding to the first plate part in a circumferential direction of the shell body, and the second side plate comprises the fifth plate part disposed corresponding to the first plate part in the circumferential direction of the shell body; the first plate part is connected to the third plate part and the fifth plate part, and inner surfaces of the first plate part, the third plate part, and the fifth plate part exhibit rounded transition.

26. A battery cell, comprising:
the shell body according to any one of claims 1 to 25;
an electrode assembly accommodated in the shell body; and
an end cover welded to the second plate part, the first side plate, and the second side plate.

27. The battery cell according to claim 26, further comprising an insulating assembly disposed outside the electrode assembly and insulating the electrode assembly from the shell body, wherein
the first side plate comprises the third plate part and the fourth plate part; in the first direction, the fourth plate part is located on the side of the third plate part proximal to the shell body opening, and the inner surface of the third plate part is arranged to be concave relative to the inner surface of the fourth plate part to form a clearance space;
the insulating assembly is at least partially located in the clearance space.

28. The battery cell according to claim 27, wherein the insulating assembly comprises a first insulating member and a second insulating member, the second insulating member defines, in an enclosing manner, a hollow structure configured to accommodate the electrode assembly and having an opening, and the first insulating member is located on a side of the second insulating member facing away from the electrode assembly;
the first insulating member is at least partially located in the clearance space.

29. The battery cell according to claim 28, wherein the second insulating member presents a surrounding form with ends connected to form an overlapping region, and the first insulating member is fixed to the overlapping region.

30. The battery cell according to claim 28 or 29, wherein the second insulating member is partially located in the clearance space.

31. The battery cell according to any one of claims 26 to 30, wherein the first side plate comprises the third plate part and the fourth plate part; in the first direction, the fourth plate part is located on the side of the third plate part proximal to the shell body opening, and the inner surface of the third plate part is arranged to be concave relative to the inner surface of the fourth plate part to form the clearance space;
the electrode assembly is partially located in the clearance space.

32. The battery cell according to any one of claims 26 to 31, wherein the first side plate comprises the third plate part, the fourth plate part, and the first transition part connecting the third plate part and the fourth plate part; in the first direction, the fourth plate part is located on the side of the third plate part proximal to the shell body opening, and in the first direction and the direction from the third plate part toward the fourth plate part, the thickness of the first transition part gradually increases;
the electrode assembly comprises a main body part and a tab connected to the main body part, and the main body part is located on a side of the first transition part facing away from the shell body opening.

33. The battery cell according to claim 32, wherein in the first direction, a projection of the main body part overlaps with a projection of the fourth plate part;
in a thickness direction of the first side plate, a projection of the first transition part does not overlap with the projection of the main body part.

34. The battery cell according to any one of claims 26 to 33, wherein the battery cell further comprises the second insulating member, and the second insulating member defines, in an enclosing manner, a hollow structure configured to accommodate the electrode assembly and having an opening;
the electrode assembly comprises the main body part and the tab connected to the main body part, the second insulating member extends beyond the main body part by a dimension L1 in the first direction, and L1 satisfies that 1 mm ≤ L1 ≤ 10 mm.

35. The battery cell according to claim 34, wherein a spacing between a side of the second insulating member facing the shell body opening and the shell body opening in the first direction is L2, and L2 satisfies that 1 mm ≤ L2 ≤ 10 mm.

36. The battery cell according to any one of claims 26 to 35, wherein the shell body further comprises a bottom plate disposed opposite to the shell body opening, a maximum thickness of the bottom plate is W3, and W3 satisfies that 0.7 mm ≤ W3 ≤ 5 mm.

37. The battery cell according to claim 36, wherein the maximum thickness of the second plate part is less than the maximum thickness of the bottom plate.

38. The battery cell according to any one of claims 26 to 37, wherein the first side plate comprises the third plate part and the fourth plate part, and in the first direction, the fourth plate part is located on the side of the third plate part proximal to the shell body opening;
the second side plate comprises the fifth plate part and the sixth plate part; in the first direction, the sixth plate part is located on the side of the fifth plate part proximal to the shell body opening, and the sixth plate part is provided with the first recess formed by being recessed inward from the shell body opening;
the end cover is partially located in the first recess and connected to the sixth plate part and the fourth plate part.

39. A battery, comprising the battery cell according to any one of claims 26 to 38.

40. The battery according to claim 39, comprising:
a battery cell group, wherein the battery cell group comprises a plurality of battery cells stacked in the third direction; the first side plate comprises the third plate part and the fourth plate part, and in the first direction, the fourth plate part is located on the side of the third plate part proximal to the shell body opening; the maximum thickness of the fourth plate part is greater than the maximum thickness of the third plate part, and the third direction is parallel to the thickness direction of the first side plate and intersects with the first direction; and
an end plate, wherein in the third direction, the end plate is disposed at an end part of the battery cell group;
wherein in the direction from the third plate part toward the fourth plate part, the fourth plate part at least partially extends beyond the end plate.

41. An electric device, comprising the battery cell according to any one of claims 26 to 38, wherein the battery cell is configured to provide electric energy.
